# EUROPEAN PATENT APPLICATION

(11) **EP 4 597 924 A1**
(43) Date of publication of application: **06.08.2025**
(21) Application number: 22959971.7
(22) Date of filing: 28.09.2022
(51) Int. Cl.: H04L 9/22

(54) **UPLINK PHASE TRACKING-REFERENCE SIGNAL PORT INDICATION METHOD, APPARATUS AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/122316
(87) International publication number: WO 2024/065328

(57) **Abstract**

The present disclosure relates to an uplink PT-RS port indication method, an apparatus and a storage medium. The uplink PT-RS port indication method is applied to a network device. The method comprises: in response to determining a terminal performing, on the basis of a single downlink control information (S-DCI) scheduling mode, simultaneous transmission via multiple antenna panels (STxMP) of a physical uplink shared channel (PUSCH), configuring the terminal to send a PT-RS reference signal; and sending indication information to the terminal, the indication information being used for indicating an association relationship between a PT-RS port and a DMRS port during sending of the PT-RS reference signal by the terminal. The present disclosure enhances the association relationship between the PT-RS port and the DMRS port during the STxMP.

## Description

### TECHNICAL FIELD

The present disclosure relates to the field of communication technology, and in particular to a method, an apparatus and a storage medium for indicating an uplink phase tracking-reference signal (PT-RS) port.

### BACKGROUND

In the multi-transmission and reception point (multi-TRP) scenario, the uplink enhancement supports the repeated transmission of the physical uplink shared channel (PUSCH)/physical uplink control channel (PUCCH) by using a multiplexing manner of time division multiplex (TDM) to send uplink channels to different transmission and reception points (TRPs) in different uplink beam directions. At present, the bottleneck of the communication system still lies in the uplink transmission rate and coverage. Therefore, the system enhancement direction of the R18 standard mainly considers the use of terminals with multi-panel (multiple antenna panels) for simultaneous uplink transmission in the Multi-TRP (also known as mTRP or M-TRP) scenario, so as to increase the uplink rate and further improve the reliability of transmission.

In new radio (NR), in order to enhance signal coverage and improve signal quality, PT-RS is configured by the network to the terminal as a UE-specific reference signal. PT-RS is used to track the phase noise introduced by the local oscillator in the network device and the terminal, and is used to estimate the common phase error (CPE). Herein, PT-RS can be regarded as an extension of demodulation reference signal (DMRS) and has a close relationship therewith, such as adoption of same precoding, port correlation, orthogonal sequence generation, quasi co-location (QCL) relationship, and the like.

In uplink enhancement, in order to support the simultaneous transmission via multi-panel (STxMP) scheme based on single downlink control information (S-DCI, also known as single DCI), it is to consider different association mapping indication schemes between PT-RS and DMRS under different transmission multiplexing schemes, so as to support accurate estimation of CPE in the case of multi-panel terminals.

### SUMMARY

In order to overcome the problems existing in the related art, the present disclosure proposes a method, an apparatus and a storage medium for indicating an uplink PT-RS port.

According to a first aspect of embodiments of the present disclosure, a method for indicating an uplink PT-RS port is provided, which is applied to a network device and includes:
configuring, in response to determining that a terminal performs STxMP of a PUSCH based on an S-DCI scheduling mode, the terminal to send a PT-RS reference signal; and sending indication information to the terminal, where the indication information is used to indicate an association relationship between a DMRS port and a PT-RS port when the terminal sends the PT-RS reference signal.

In an implementation mode, the indication information includes a PT-RS-DMRS association relationship indication field, and different indication modes of the PT-RS-DMRS association relationship indication field are used to indicate different association relationships between the PT-RS port and the DMRS port.

In an implementation mode, an indication mode of the association relationship between the DMRS port and the PT-RS port is determined based on at least one of following information:
a maximum number of PT-RS ports; a transmission mode adopted by the terminal for uplink transmission; an actual transmission rank of the terminal.

In an implementation mode, in response to the maximum number of PT-RS ports being 1, the indication mode of the association relationship between the DMRS port and the PT-RS port is determined based on the actual transmission rank.

In an implementation mode, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

In an implementation mode, in response to the maximum number of PT-RS ports being 2, the indication mode of the association relationship between the DMRS port and the PT-RS port is determined based on the transmission mode and the actual transmission rank.

In an implementation mode, in response to the transmission mode being a space division multiplexing (SDM) transmission mode and the actual transmission rank being 2, the PT-RS-DMRS association relationship indication field is indicated by 0 bit.

In an implementation mode, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/transmission configuration indication (TCI)/transmission occasion (TO) supported by the terminal.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

In an implementation mode, in response to the transmission mode being a frequency division multiplexing (FDM) transmission mode or a single frequency network (SFN) transmission mode, and the actual transmission rank being greater than 1, the PT-RS-DMRS association relationship indication field indicates, through different bits, different PT-RS ports of different panels.

In an implementation mode, the actual transmission rank is 2, and the PT-RS-DMRS association relationship indication field indicates the different PT-RS ports of different panels through 2 bits.

In an implementation mode, the actual transmission rank is greater than 2, and the PT-RS-DMRS association relationship indication field indicates the different PT-RS ports of different panels through 4 bits.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

In an implementation mode, the 2 bits are used to indicate association relationship between PT-RS ports, corresponding to a panel with the actual transmission rank being 3, and 3 corresponding DMRS ports on the panel; and an indication bit number of a PT-RS port, corresponding to a panel with the actual transmission rank being 1, is 0.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

According to a second aspect of embodiments of the present disclosure, a method for indicating an uplink PT-RS port is provided, which is applied to a terminal, and the method includes:
acquiring indication information sent by a network device, where the indication information is used to indicate an association relationship between a DMRS port and a PT-RS port when the terminal sends a PT-RS reference signal; performing STxMP of a PUSCH based on an S-DCI scheduling mode, and sending the PT-RS reference signal based on the association relationship between the DMRS port and the PT-RS port indicated by the indication information.

In an implementation mode, the indication information includes a PT-RS-DMRS association relationship an indication field, and different indication modes of the PT-RS-DMRS association relationship indication field are used to indicate different association relationships between the PT-RS port and the DMRS port.

In an implementation mode, an indication mode of the association relationship between the DMRS port and the PT-RS port is determined based on at least one of following information:
a maximum number of PT-RS ports; a transmission mode adopted by the terminal for uplink transmission; an actual transmission rank of the terminal.

In an implementation mode, in response to the maximum number of PT-RS ports being 1, the indication mode of the association relationship between the DMRS port and the PT-RS port is determined based on the actual transmission rank.

In an implementation mode, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

In an implementation mode, in response to the maximum number of PT-RS ports being 2, the indication mode of the association relationship between the DMRS port and the PT-RS port is determined based on the transmission mode and the actual transmission rank.

In an implementation mode, in response to the transmission mode being an SDM transmission mode and the actual transmission rank being 2, the PT-RS-DMRS association relationship indication field is indicated by 0 bit.

In an implementation mode, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/TCI/TO supported by the terminal.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

In an implementation mode, in response to the transmission mode being an FDM transmission mode or an SFN transmission mode, and the actual transmission rank being greater than 1, the PT-RS-DMRS association relationship indication field indicates, through different bits, different PT-RS ports of different panels.

In an implementation mode, the actual transmission rank is 2, and the PT-RS-DMRS association relationship indication field indicates the different PT-RS ports of different panels through 2 bits.

In an implementation mode, the actual transmission rank is greater than 2, and the PT-RS-DMRS association relationship indication field indicates the different PT-RS ports of different panels through 4 bits.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

In an implementation mode, the 2 bits are used to indicate association relationship between PT-RS ports, corresponding to a panel with the actual transmission rank being 3, and 3 corresponding DMRS ports on the panel; and
an indication bit number of a PT-RS port, corresponding to a panel with the actual transmission rank being 1, is 0.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

According to a third aspect of embodiments of the present disclosure, an apparatus for indicating an uplink PT-RS port is provided, including:
a processing module, configured to configure, in response to determining that a terminal performs STxMP of a PUSCH based on an S-DCI scheduling mode, the terminal to send a PT-RS reference signal; and a sending module, configured to send indication information to the terminal, wherein the indication information is used to indicate an association relationship between a DMRS port and a PT-RS port when the terminal sends the PT-RS reference signal.

In an implementation mode, the indication information includes a PT-RS-DMRS association relationship indication field, and different indication modes of the PT-RS-DMRS association relationship indication field are used to indicate different association relationships between the PT-RS port and the DMRS port.

In an implementation mode, an indication mode of the association relationship between the DMRS port and the PT-RS port is determined based on at least one of following information:
a maximum number of PT-RS ports; a transmission mode adopted by the terminal for uplink transmission; an actual transmission rank of the terminal.

In an implementation mode, in response to the maximum number of PT-RS ports being 1, the indication mode of the association relationship between the DMRS port and the PT-RS port is determined based on the actual transmission rank.

In an implementation mode, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

In an implementation mode, in response to the maximum number of PT-RS ports being 2, the indication mode of the association relationship between the DMRS port and the PT-RS port is determined based on the transmission mode and the actual transmission rank.

In an implementation mode, in response to the transmission mode being an SDM transmission mode and the actual transmission rank being 2, the PT-RS-DMRS association relationship indication field is indicated by 0 bit.

In an implementation mode, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/TCI/TO supported by the terminal.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

In an implementation mode, in response to the transmission mode being an FDM transmission mode or an SFN transmission mode, and the actual transmission rank being greater than 1, the PT-RS-DMRS association relationship indication field indicates, through different bits, different PT-RS ports of different panels.

In an implementation mode, the actual transmission rank is 2, and the PT-RS-DMRS association relationship indication field indicates the different PT-RS ports of different panels through 2 bits.

In an implementation mode, the actual transmission rank is greater than 2, and the PT-RS-DMRS association relationship indication field indicates the different PT-RS ports of different panels through 4 bits.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

In an implementation mode, the 2 bits are used to indicate association relationship between PT-RS ports, corresponding to a panel with the actual transmission rank being 3, and 3 corresponding DMRS ports on the panel; and an indication bit number of a PT-RS port, corresponding to a panel with the actual transmission rank being 1, is 0.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

According to a fourth aspect of embodiments of the present disclosure, an apparatus for indicating an uplink PT-RS port is provided, including:
an acquiring module, configured to acquire indication information sent by a network device, wherein the indication information is used to indicate an association relationship between a DMRS port and a PT-RS port when the terminal sends a PT-RS reference signal; and a sending module, configured to perform STxMP of a PUSCH based on an S-DCI scheduling mode, and send the PT-RS reference signal based on the association relationship between the DMRS port and the PT-RS port indicated by the indication information.

In an implementation mode, the indication information includes a PT-RS-DMRS association relationship an indication field, and different indication modes of the PT-RS-DMRS association relationship indication field are used to indicate different association relationships between the PT-RS port and the DMRS port.

In an implementation mode, an indication mode of the association relationship between the DMRS port and the PT-RS port is determined based on at least one of following information:
a maximum number of PT-RS ports; a transmission mode adopted by the terminal for uplink transmission; an actual transmission rank of the terminal.

In an implementation mode, in response to the maximum number of PT-RS ports being 1, the indication mode of the association relationship between the DMRS port and the PT-RS port is determined based on the actual transmission rank.

In an implementation mode, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

In an implementation mode, in response to the maximum number of PT-RS ports being 2, the indication mode of the association relationship between the DMRS port and the PT-RS port is determined based on the transmission mode and the actual transmission rank.

In an implementation mode, in response to the transmission mode being an SDM transmission mode and the actual transmission rank being 2, the PT-RS-DMRS association relationship indication field is indicated by 0 bit.

In an implementation mode, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/TCI/TO supported by the terminal.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

In an implementation mode, in response to the transmission mode being an FDM transmission mode or an SFN transmission mode, and the actual transmission rank being greater than 1, the PT-RS-DMRS association relationship indication field indicates, through different bits, different PT-RS ports of different panels.

In an implementation mode, the actual transmission rank is 2, and the PT-RS-DMRS association relationship indication field indicates the different PT-RS ports of different panels through 2 bits.

In an implementation mode, the actual transmission rank is greater than 2, and the PT-RS-DMRS association relationship indication field indicates the different PT-RS ports of different panels through 4 bits.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

In an implementation mode, the 2 bits are used to indicate association relationship between PT-RS ports, corresponding to a panel with the actual transmission rank being 3, and 3 corresponding DMRS ports on the panel; and
an indication bit number of a PT-RS port, corresponding to a panel with the actual transmission rank being 1, is 0.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

According to a fifth aspect of embodiments of the present disclosure, an apparatus for indicating an uplink PT-RS port is provided, including:
a processor; and
a memory for storing executable instructions of the processor;
where the processor is configured to implement the method according to the first aspect or any implementation mode thereof.

According to a sixth aspect of embodiments of the present disclosure, an apparatus for indicating an uplink PT-RS port is provided, including:
a processor; and
a memory for storing executable instructions of the processor;
where the processor is configured to implement the method according to the second aspect or any implementation mode thereof.

According to a seventh aspect of embodiments of the present disclosure, a storage medium is provided, in which instructions are stored, where the instructions in the storage medium, upon being executed by a processor of a network device, cause the network device to implement the method according to the first aspect or any implementation mode thereof.

According to an eighth aspect of embodiments of the present disclosure, a storage medium is provided, in which instructions are stored, where the instructions in the storage medium, upon being executed by a processor of a network device, cause the network device to implement the method according to the second aspect or any implementation mode thereof.

The technical solution provided by some embodiments of the present disclosure may include the following beneficial effects. When the terminal performs STxMP transmission of PUSCH based on the S-DCI scheduling mode, the network device configures the terminal to send a PT-RS reference signal and sends indication information to the terminal, where the indication information is used to indicate the association relationship between the DMRS port and the PT-RS port when the terminal sends the PT-RS reference signal, thereby enhancing the association relationship between the DMRS port and the PT-RS port in STxMP transmission. Different association mapping indication schemes between PT-RS and DMRS are considered under different transmission multiplexing schemes, thereby supporting accurate estimation of CPE in the case of terminal having multiple panels.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a wireless communication system according to an exemplary embodiment.
FIG. 2 is a logic diagram of multi-panel transmission implementation based on single DCI (S-DCI).
FIG. 3 shows a schematic diagram of a codeword-to-layer layer mapping scheme.
FIG. 4A to FIG. 4D show schematic diagrams of the pattern design of two configuration types of front-load DMRS.
FIG. 5 is a flow chart showing a method for indicating an uplink PT-RS port according to an exemplary embodiment.
FIG. 6 is a flow chart showing a method for determining an indication mode of an association relationship between a DMRS port and a PT-RS port according to an exemplary embodiment.
FIG. 7 is a flow chart showing a method for determining an indication mode of an association relationship between a DMRS port and a PT-RS port according to an exemplary embodiment.
FIG. 8 is a flowchart showing a method for indicating an uplink PT-RS port according to an exemplary embodiment.
FIG. 9 is a block diagram of an apparatus for indicating an uplink PT-RS port according to an exemplary embodiment.
FIG. 10 is a block diagram of an apparatus for indicating an uplink PT-RS port according to an exemplary embodiment.
FIG. 11 is a block diagram showing an apparatus for indicating an uplink PT-RS port according to an exemplary embodiment.
FIG. 12 is a block diagram showing an apparatus for indicating an uplink PT-RS port according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of this disclosure. Rather, they are merely examples of apparatuses and methods consistent with some aspects of embodiments of this disclosure.

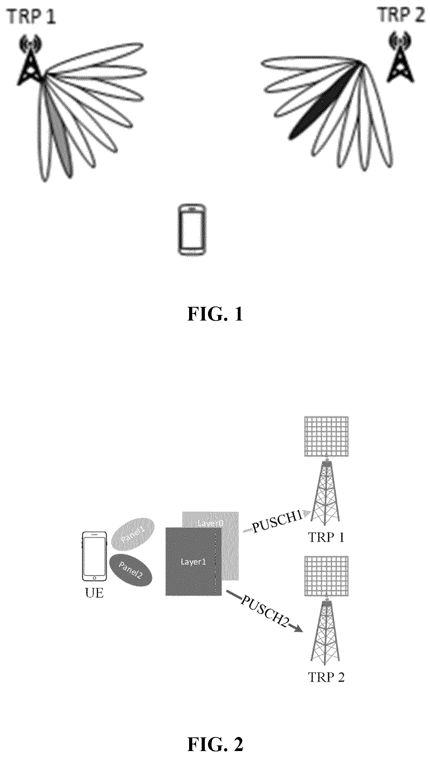

A method for indicating uplink PT-RS port according to some embodiments of the present disclosure can be applied to a wireless communication system shown in FIG. 1. As shown in FIG. 1, the wireless communication system includes a network device and a terminal. The terminal is connected to the network device through wireless resources and performs data transmission. The network device and the terminal perform data transmission based on beams. The network device and the terminal can enhance PUSCH uplink transmission based on Multi-TRP/Multi-panel.

It is to be understood that the wireless communication system shown in FIG. 1 is only for schematic illustration, and the wireless communication system may also include other network devices, such as core network devices, wireless relay devices, and wireless backhaul devices, which are not shown in FIG. 1. The embodiments of the present disclosure do not limit the number of network devices and terminals included in the wireless communication system.

It can be further understood that the wireless communication system according to some embodiments of the present disclosure is a network that provides wireless communication functions. The wireless communication system can adopt different communication technologies, such as code division multiple access (CDMA), wideband code division multiple access (WCDMA), time division multiple access (TDMA), frequency division multiple access (FDMA), orthogonal frequency division multiple access (OFDMA), single carrier frequency division multiple access (SC-FDMA), carrier sense multiple access/collision avoidance. According to the capacity, rate, delay and other factors of different networks, the network can be divided into 2G (generation) network, 3G network, 4G network or future evolution network, such as 5G network. 5G network can also be called new radio (NR). For the convenience of description, the present disclosure sometimes simply refers to a wireless communication network as a network.

Further, the network device involved in the present disclosure may also be referred to as a wireless access network device. The wireless access network device may be: a base station, an evolved node B (base station), a home base station, an access point (AP) in a wireless fidelity (WIFI) system, a wireless relay node, a wireless backhaul node, a transmission point (TP) or a transmission and reception point (TRP), or the like. It may also be a gNB in the NR system, or it may also be a component or a part of a base station. It should be understood that in some embodiments of the present disclosure, the specific technology and specific device form adopted by the network device are not limited. In the present disclosure, the network device may provide communication coverage for a specific geographical area, and may communicate with a terminal located in the coverage area (cell). In addition, when it is a vehicle-to-everything (V2X) communication system, the network device may also be a vehicle-mounted device.

Furthermore, the terminal involved in the present disclosure may also be referred to as a terminal device, a user equipment (UE), a mobile station (MS), a mobile terminal (MT), or the like, which is a device that provides voice and/or data connectivity to users. For example, the terminal may be a handheld device with a wireless connection function, a vehicle-mounted device, or the like. At present, some examples of terminals include: a smart mobile phone, a customer premise equipment (CPE), a pocket personal computer (PPC), a handheld computer, a personal digital assistant (PDA), a laptop computer, a tablet computer, a wearable device, a vehicle-mounted device, or the like. In addition, when a vehicle-to-everything (V2X) communication system is involved, the terminal device may also be a vehicle-mounted device. It should be understood that the embodiments of the present disclosure do not limit the specific technology and specific device form adopted by the terminal.

In the multi-transmission and reception point (multi-TRP) scenario, the uplink enhancement supports the repeated transmission of physical uplink shared channel (PUSCH)/physical uplink control channel (PUCCH) by using time division multiplexing (TDM) multiplexing, so as to send uplink channels to different TRPs in different uplink beam directions. At present, the bottleneck of the communication system is still the uplink transmission rate and coverage. Therefore, the system enhancement direction of the R18 standard mainly considers the use of multi-panel terminals for simultaneous uplink transmission in the Multi-TRP (also known as mTRP or M-TRP) scenario, so as to increase the uplink rate and further improve the reliability of transmission.

In NR, in order to enhance signal coverage and improve signal quality, phase tracking-reference signal (PT-RS) is configured by the network to the terminal as a UE-specific reference signal. PT-RS is used to track the phase noise introduced by the local oscillator in the network device and the terminal and is used to estimate the common phase error (CPE). Herein, PT-RS can be regarded as an extension of the demodulation reference signal (DMRS) and has a close relationship therewith, such as using the same precoding, port correlation, orthogonal sequence generation, quasi co-location (QCL) relationship, and the like.

In uplink enhancement, in order to support the simultaneous transmission via multi-panel (STxMP) scheme based on single-DCI (single downlink control information, S-DCI, also known as single DCI), it is to consider different association mapping indication schemes between PT-RS and DMRS under different transmission multiplexing schemes, so as to support accurate estimation of CPE in the case of multi-panel terminals.

In the related art, when a network device (e.g., a base station) has multiple TRPs, M-TRP/multi-panel can be used to provide services to the terminal. Moreover, CoMP (Coordinate MultiPoint) technology is introduced to enable the network device to provide a more balanced service quality within the service area. In an implementation mode, there is a corresponding relationship between Panel, TRP, TCI (Transmission Configuration Indication) and TO (transmission occasion), so TRP/Panel/TCI/TO, or multiple TRP/Panel/TCI/TO are used in this disclosure. In all embodiments of the present disclosure, "/" means "or".

Different from single-point transmission such as a single TRP or panel, CoMP means that multiple TRPs (Multi-TRP, mTRP)/panels provide data services for one user. Herein, the antenna array of each TRP can be divided into several relatively independent panels, so the shape and number of ports of the entire array can be flexibly adjusted according to the deployment scenario and service needs. The panels or TRPs can also be connected by optical fiber for more flexible distributed deployment. In the millimeter wave band, as the wavelength decreases, the blocking effect caused by obstacles such as human bodies or vehicles will be more significant. In this case, from the perspective of ensuring the robustness of the link connection, the collaboration between multiple TRPs or panels can be used to transmit/receive from multiple beams at multiple angles, thereby reducing the adverse effects of the blocking effect.

The multiple sites involved in the CoMP transmission procedure may correspond to multiple sites with different geographical locations or multiple sectors with different panel orientations. For example, when a terminal receives data from different sites, the spatial differences between the sites will lead to differences in the large-scale channel parameters of the receiving links from different sites, such as Doppler frequency offset, delay spread, and the like. The large-scale parameters of the channel will directly affect the adjustment and optimization of the filter coefficients during channel estimation. Different channel estimation filter parameters should be used for signals sent from different sites, thereby adapting to the corresponding channel propagation characteristics.

Therefore, although the differences in spatial position or angle of each site are transparent to the UE and the CoMP operation itself, the impact of the above spatial differences on the large-scale parameters of the channel is an important factor that the UE is to consider when performing channel estimation and reception detection. Therefore, quasi-co-location (QCL) is introduced in the related art. QCL means that the large-scale parameters of the channel experienced by the symbol on a certain antenna port can be inferred from the channel experienced by the symbol on another antenna port. The large-scale parameters may include delay spread, average delay, Doppler spread, Doppler shift, average gain, and spatial reception parameters.

The so-called QCL of two antenna ports in the sense of certain large-scale parameters means that these large-scale parameters of the two ports are the same. In other words, as long as some large-scale parameters of the two ports are consistent, regardless of whether their actual physical locations or corresponding panel orientations are different, the terminal can consider that the two ports perform transmission from the same location (i.e., quasi-co-sited).

For some typical application scenarios, considering the possible QCL relationship between various reference signals, from the perspective of simplifying signaling, several channel large-scale parameters in NR are divided into the following four types to facilitate system configuration/indication according to different scenarios.
- QCL-TypeA: {Doppler frequency shift, Doppler spread, average delay, delay spread}
   - Except for the spatial reception parameters, all other large-scale parameters are the same.
   - For frequency bands below 6 GHz, spatial reception parameters may not be required.
- QCL-TypeB: {Doppler frequency shift, Doppler spread}
   - Only for 6GHz
- QCL-TypeC: {Doppler frequency shift, average delay}
- QCL-TypeD: {spatial reception parameters}
   As mentioned above, since this parameter is mainly for frequency bands above 6 GHz, it is treated as a separate QCL type.

In the Multi-TRP scenario of R17 standard, uplink enhancement supports the repeated transmission of PUSCH/PUCCH channels by using the TDM multiplexing scheme to send uplink channels to different TRPs in different uplink beam directions.

At present, the bottleneck of the communication system is still the rate and coverage of uplink transmission. Therefore, for the system enhancement direction of the R18 standard, the main consideration is that in the Multi-TRP scenario, the terminal uses multiple TRP/Panel/TCI/TO for uplink STxMP to increase the uplink rate and further improve the reliability of transmission, thereby performing simultaneous transmission enhancement of PUSCH based on the multiple TRP/Panel/TCI/TO of terminal. Herein, the PUSCH enhancement based on Multi-TRP can be scheduled based on a DCI carried by a physical downlink control channel (PDCCH), such as multiple TRP/Panel/TCI/TO transmission scheduled by single DCI (S-DCI). It is also possible to consider scheduling of different DCIs carried by different PDCCHs separately. FIG. 2 is a logical diagram of the multi-panel transmission implementation based on S-DCI. As shown in FIG. 2, the terminal (UE) transmits PUSCH1 and PUSCH2 through panel1 and panel2 based on transport layer (Layer) 1 and Layer 2, facing TRP1 and TRP2 respectively.

Herein, multiple physical panels are generally configured in the multi-panel implementation of the terminal, and the capabilities of different panels may also be different. For example, the maximum number of sounding reference signal (SRS) ports may be different, and the supported maximum number of data transmission layers may not be the same. For example, one panel supports a maximum of 2 layers of transmission, and the other panel supports a maximum of 4 layers of transmission. The scheduler of the network device will determine whether the terminal is currently suitable for simultaneous uplink transmission of multiple panels. If the terminal is currently suitable for simultaneous uplink transmission of multiple panels scheduled at the same time, the network device will directly or indirectly indicate the relevant transmission parameters, including the terminal's specific beam indication information, the number of data layers used for transmission, and the allocation of used DMRS ports, as well as precoding indication information, and the like.

The method according to some embodiments of the present disclosure is applicable to the DMRS port indication problem under S-DCI scheduling, that is, how to determine which DMRS ports are used to send PUSCH on different panels.

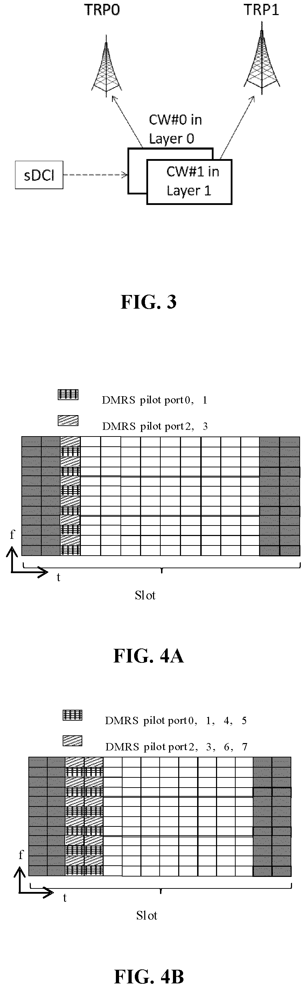

The current protocol supports a maximum of 4 uplink transmission layers, corresponding to the transmission of one codeword. Therefore, in multi-panel enhancement, another problem lies in how to support 2 codewords in the uplink to achieve flexible mapping. In the related art, in the uplink or downlink layer mapping scheme, the case where the number of data layers is 2-4 corresponds to the transmission of 1 codeword (CW). However, this configuration makes it difficult for adapting a single MCS to the channel conditions of different layers. Therefore, when the inter-layer channel performance difference is large, performance loss will occur. Therefore, it is considered that 2 CWs are also used for scheduling and transmission for data of 2-4 layers or only 4 layers. FIG. 3 shows a schematic diagram of a codeword-to-layer layer mapping scheme. As shown in FIG. 3 below, in STxMP transmission under S-DCI scheduling, codeword 0 is mapped to layer 0 (CW#0 in Layer0), and codeword 1 is mapped to layer 1 (CW#1 in Layer1) for uplink transmission with respect to TRP0 and TRP1. In this way, network devices can fully perform scheduling according to inter-layer channel conditions. For example, for Layer 3 transmission, if the difference between channel layers is large, two CWs can be used for scheduling, with one CW for Layer 1 data transmission and the other CW for Layer 2 data transmission. This also facilitates data retransmission scheduling and helps improve system throughput. The system mainly performs transmission below Layer 4, so it is also beneficial for overall performance optimization.

Herein, for the uplink synchronous transmission of multiple panels, the collaborative transmission scheduling of one TB of PUSCH based on S-DCI may support one or more transmission schemes including Space Division Multiplexing (SDM), Frequency Division Multiplexing (FDM) and Single Frequency Network (SFN).

Herein, the SDM spatial division multiplexing scheme is mainly that a transport block (TB) of PUSCH sends different data layers on the same time-frequency resources to two different TRPs through corresponding DMRS ports or port combinations allocated on different Panels. Different TRP/Panel/TCI/TO are associated with different beams/TCI states (i.e. beam indications).

The SDM space division multiplexing scheme includes two schemes: SDM-A and SDM-B.

In SDM-A, different parts of a TB of PUSCH are sent, oriented two different TRPs, on the same time-frequency resources through corresponding DMRS ports or port combinations allocated on different panels, and different TRP/Panel/TCI/TO are associated with different TCIstates, i.e. beams.

In SDM-B, the repetitions of the same TB corresponding to different RV versions of PUSCH are sent, oriented two different TRPs, on the same time-frequency resources through corresponding DMRS ports or port combinations allocated on different panels, and different TRP/Panel/TCI/TO are associated with different TCIstates, i.e. beams.

For the FDM frequency division multiplexing scheme, a TB of PUSCH is sent, oriented two different TRPs, on non-overlapping frequency domain resources on the same time domain resources through the same DMRS port or port combination allocated on different panels, and different TRP/Panel/TCI/TO are associated with different TCIstates, i.e. beams.

FDM includes two possible solutions: FDM-A and FDM-B.

In FDM-A, different parts of a TB of PUSCH are sent, oriented two different TRPs, on non-overlapping frequency domain resources on the same time domain resources through the same DMRS port or port combination allocated on different Panels, and different TRP/Panel/TCI/TO are associated with different TCIstates, i.e. beams.

oriented FDM-B, the repetitions of the same TB corresponding to different RV versions of PUSCH are sent, oriented two different TRPs, on non-overlapping frequency domain resources on the same time domain resources through the same DMRS port or port combination allocated on different Panels, and different TRP/Panel/TCI/TO are associated with different TCIstate, i.e., beams.

For the SFN solution, a TB of PUSCH is send, oriented two different TRPs, through the same data layer on the same time-frequency resources through the same DMRS port or port combination allocated on different Panels, and different Panel/TRP/TO are associated with different TCIstates, i.e., beams.

Furthermore, the application of multiple TRP/Panel/TCI/TO is mainly to improve the coverage at the edge of the cell, provide a more balanced service quality in the service area, and use different modes to collaborate transmission of data between multiple TRP/Panel/TCI/TO. From the perspective of network morphology, network deployment with a large number of distributed access points plus centralized baseband processing will be more conducive to providing a balanced user experience rate and significantly reduce the delay and signaling overhead caused by handover. By utilizing the collaboration between multiple TRPs or panels and transmitting/receiving channels from multiple beams at multiple angles, various occlusion/blocking effects can be better overcome, ensuring the robustness of link connections, which is suitable for URLLC services to improve transmission quality and meet reliability requirements.

In the R16 research phase, based on the application of multi-point coordinated transmission technology between downlink multiple TRPs/panels, PDSCH transmission was enhanced. Since data transmission includes scheduling feedback of uplink and downlink channels, in the URLLC research, only enhancing the downlink data channel cannot guarantee the overall service performance. Therefore, in the R17 research, PDCCH, PUCCH and PUSCH are to be enhanced.

Herein, the network device and the terminal can enhance the PUSCH uplink transmission based on Multi-TRP/Multi-panel. Specifically, the PUSCH uplink transmission scheme includes a codebook-based uplink transmission scheme and a non-codebook-based uplink transmission scheme.

In the related art, phase noise (PN) is caused by the execution of the local oscillator, which destroys the orthogonality of each subcarrier in the OFDM system. This further causes the common phase error (CPE), which causes the modulation constellation to rotate at a fixed angle; and causes the inter-carrier interference (ICI), which causes the scattering of the constellation points. Such situation is more obvious at high frequencies. Since the impact of CPE is greater, the main consideration in NR is to compensate for CPE. In NR, the PT-RS signal is designed for CPE estimation. In order to enhance signal coverage and improve signal quality, PT-RS is configured by the network to the terminal as a UE-specific reference signal. PT-RS is used to track the phase noise introduced by the local oscillator in the gNB and UE. PT-RS can be regarded as an extension of DMRS. They have a close relationship, such as using the same precoding, port association, orthogonal sequence generation, QCL relationship, and the like.

Embodiments of the present disclosure is described below with reference to the association relationship between the DMRS port and the PT-RS port.

First, the DMRS port is described.

Herein, for PDSCH/PUSCH channels, the data layer of data transmission corresponds to the DMRS port used for demodulation. The DMRS design of the data channel (PDSCH/PUSCH) in the NR system mainly includes the front-load DMRS and additional DMRS.

For the front-load DMRS, the first appearance of DMRS should be as close to the starting point of scheduling as possible in each scheduling time unit. The use of front-load DMRS helps the receiving side to quickly estimate the channel and perform reception detection, which plays an important role in reducing latency and supporting the so-called selfcontained structure. Depending on the total number of orthogonal DMRS ports, front-load DMRS can occupy up to two consecutive Orthogonal Frequency Division Multiplexing (OFDM) symbols.

The design ideas of front-load DMRS may be divided into two types. The first type (type 1) adopts the COMB+OCC structure, and the second type (type 2) adopts the FDM+OCC structure.

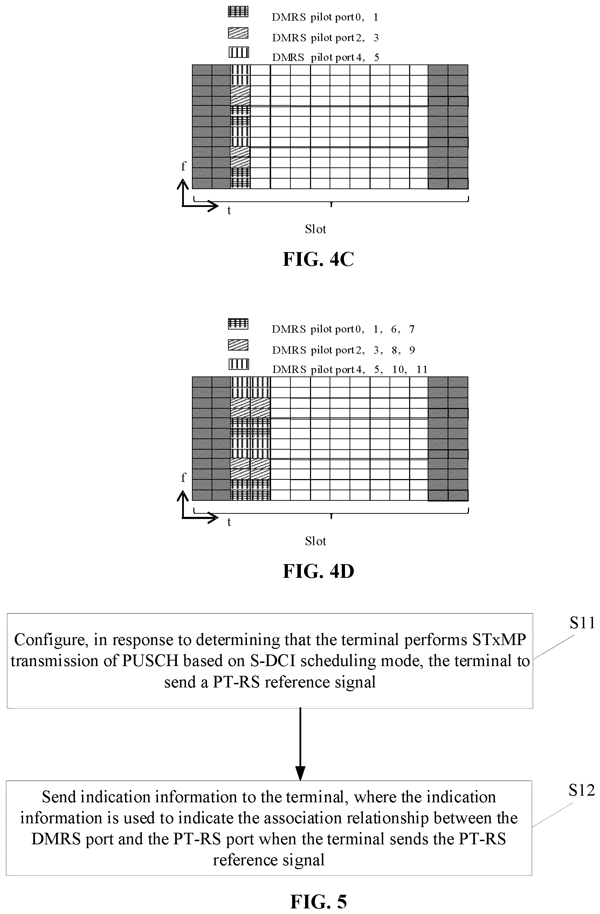

FIG. 4A to FIG. 4D show schematic diagrams of front-load DMRS pattern designs for two configuration types. Herein, FIG. 4A and FIG. 4B show schematic diagrams of DMRS pattern mapping for 1 OFDM symbol and 2 OFDM symbols corresponding to configuration type 1. FIG. 4C and FIG. 4D show schematic diagrams of DMRS pattern mapping for 1 OFDM symbol and 2 OFDM symbols corresponding to configuration type 2.

The number of DMRS ports depends on the number of orthogonal ports used for transmission, and the front-load DMRS can be configured as two OFDM symbols at most. Considering the power efficiency factor, when using two-symbol front-load DMRS, TD-OCC is used in the time domain on the basis of CS or OCC in the frequency domain.

For low mobility scenarios, front-load DMRS can achieve channel estimation performance that meets demodulation requirements with low overhead. However, the mobile speed considered by the NR system can reach up to 500km/h. Faced with such a large dynamic range of mobility, in addition to front-load DMRS, in medium/high speed scenarios, in addition to front-load DMRS, more DMRS symbols need to be inserted within the scheduling duration to meet the estimation accuracy of channel time variability. The NR system adopts a DMRS structure that combines front-load DMRS with additional DMRS having configurable time domain density. The pattern of each group of additional DMRS is a repetition of the front-load DMRS. Therefore, consistent with the front-load DMRS, each group of additional DMRS can also occupy up to two consecutive DMRS symbols. Depending on the specific usage scenario, up to three groups of additional DMRS can be configured in each scheduling. The number of additional DMRS depends on the high-level parameter configuration and the specific scheduling duration.

Relevant protocols provide DMRS port allocation methods with different parameter configurations under the uplink cyclic prefix orthogonal frequency-division multiplexing (CP-OFDM) waveform.

The following tables show the DMRS port allocation for different parameter configurations. In the following table, "Value" represents the code point, "Number of DMRS CDM group(s) without data" represents the number of DMRS CDM groups not occupied by data, "DMRS port" represents the DMRS port, and "Number of front-load symbols" represents the number of front-load symbols.

**Table 1**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

Herein, Table 1 represents antenna port(s), transform precoder is disabled, dmrs-Type=1 (DMRS type), maxLength (maximum length)=1, RANK (the number of transmission layer(s))=1, that is, the DMRS port allocation diagram in the case of DMRS type 1, single symbol, single stream transmission.

**Table 2**

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

Herein, Table 2 represents antenna port(s), transform precoder is disabled, dmrs-Type=1, maxLength=1, RANK=2, that is, the DMRS port allocation diagram in the case of DMRS type 1, single symbol, and dual-layer transmission.

**Table 3**

| Value | Number of DMRS CDM group(s) without data | DMRS port(s) |
|---|---|---|
| 0 | 2 | 0-2 |
| 2-7 | Reserved | Reserved |

Herein, Table 3 represents antenna port(s), transform precoder is disabled, dmrs-Type=1, maxLength=1, RANK=3, that is, the DMRS port allocation diagram in the case of DMRS type 1, single symbol, and three-layer transmission.

**Table 4**

| Value | Number of DMRS CDM group(s) without data | DMRS port(s) |
|---|---|---|
| 0 | 2 | 0-3 |
| 2-7 | Reserved | Reserved |

Herein, Table 4 represents antenna port(s), transform precoder is disabled, dmrs-Type=1, maxLength=1, RANK=4, that is, the DMRS port allocation diagram in the case of DMRS type 1, single symbol, and four-layer transmission.

**Table 5**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14-15 | Reserved | Reserved | Reserved |

Herein, Table 5 represents antenna port(s), transform precoder is disabled, dmrs-Type=1, maxLength=2, RANK=1, that is, the DMRS port allocation diagram in the case of DMRS type 1, two symbols, and single stream transmission.

**Table 6**

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-15 | Reserved | Reserved | Reserved |

Herein, Table 6 represents antenna port(s), transform precoder is disabled, dmrs-Type=1, maxLength=2, RANK=2, that is, the DMRS port allocation diagram in the case of DMRS type 1, two symbols, and two-layer transmission.

**Table 7**

| Value | Number of DMRS CDM group(s) without data | DMRS port(s) | Number of front-load symbols |
|---|---|---|---|
| 0 | 2 | 0-2 | 1 |
| 1 | 2 | 0,1,4 | 2 |
| 2 | 2 | 2,3,6 | 2 |
| 3-15 | Reserved | Reserved | Reserved |

Herein, Table 7 represents antenna port(s), transform precoder is disabled, dmrs-Type=1, maxLength=2, RANK=3, that is, the DMRS port allocation diagram in the case of DMRS type 1, two symbols, and three-layer transmission.

**Table 8**

| Value | Number of DMRS CDM group(s) without data | DMRS port(s) | Number of front-load symbols |
|---|---|---|---|
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| 4-15 | Reserved | Reserved | Reserved |

Herein, Table 8 represents antenna port(s), transform precoder is disabled, dmrs-Type=1, maxLength=2, RANK=2, that is, the DMRS port allocation diagram in the case of DMRS type 1, two symbols, and four-layer transmission.

**Table 9**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

Herein, Table 9 represents antenna port(s), transform precoder is disabled, dmrs-Type=2, maxLength=1, RANK=1, that is, the DMRS port allocation diagram in the case of DMRS type 2, single symbol, and single layer transmission.

**Table 10**

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 3 | 0,1 |
| 4 | 3 | 2,3 |
| 5 | 3 | 4,5 |
| 6 | 2 | 0,2 |
| 7-15 | Reserved | Reserved |

Herein, Table 10 represents antenna port(s), transform precoder is disabled, dmrs-Type=2, maxLength=1, RANK=2, that is, the DMRS port allocation diagram in the case of DMRS type 2, single symbol, and two-layer transmission.

**Table 11**

| Value | Number of DMRS CDM group(s) without data | DMRS port(s) |
|---|---|---|
| 0 | 2 | 0-2 |
| 1 | 3 | 0-2 |
| 2 | 3 | 3-5 |
| 3-15 | Reserved | Reserved |

Herein, Table 11 represents antenna port(s), transform precoder is disabled, dmrs-Type=2, maxLength=1, RANK=3, that is, the DMRS port allocation diagram in the case of DMRS type 2, single symbol, and three-layer transmission.

**Table 12**

| Value | Number of DMRS CDM group(s) without data | DMRS port(s) |
|---|---|---|
| 0 | 2 | 0-3 |
| 1 | 3 | 0-3 |
| 2-15 | Reserved | Reserved |

Herein, Table 12 represents antenna port(s), transform precoder is disabled, dmrs-Type=2, maxLength=1, RANK=4, that is, the DMRS port allocation diagram in the case of DMRS type 2, single symbol, and four-layer transmission.

**Table 13**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| **28-31** | Reserved | Reserved | Reserved |

Herein, Table 13 represents antenna port(s), transform precoder is disabled, dmrs-Type=2, maxLength=2, RANK=1, that is, the DMRS port allocation diagram in the case of DMRS type 2, two symbols, and single transmission.

**Table 14**

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 3 | 0.1 | 1 |
| 4 | 3 | 2,3 | 1 |
| 5 | 3 | 4,5 | 1 |
| 6 | 2 | 0,2 | 1 |
| 7 | 3 | 0.1 | 2 |
| 8 | 3 | 2,3 | 2 |
| 9 | 3 | 4,5 | 2 |
| 10 | 3 | 6,7 | 2 |
| 11 | 3 | 8,9 | 2 |
| 12 | 3 | 10,11 | 2 |
| 13 | 1 | 0.1 | 2 |
| 14 | 1 | 6,7 | 2 |
| 15 | 2 | 0.1 | 2 |
| 16 | 2 | 2,3 | 2 |
| 17 | 2 | 6,7 | 2 |
| 18 | 2 | 8,9 | 2 |
| 19-31 | Reserved | Reserved | Reserved |

Herein, Table 14 represents antenna port(s), transform precoder is disabled, dmrs-Type=2, maxLength=2, RANK=2, that is, the DMRS port allocation diagram in the case of DMRS type 2, two symbols, and dual-layer transmission.

**Table 15**

| Value | Number of DMRS CDM group(s) without data | DMRS port(s) | Number of front-load symbols |
|---|---|---|---|
| 0 | 2 | 0-2 | 1 |
| 1 | 3 | 0-2 | 1 |
| 2 | 3 | 3-5 | 1 |
| 3 | 3 | 0,1,6 | 2 |
| 4 | 3 | 2,3,8 | 2 |
| 5 | 3 | 4,5,10 | 2 |
| 6-31 | Reserved | Reserved | Reserved |

Herein, Table 15 represents antenna port(s), transform precoder is disabled, dmrs-Type=2, maxLength=2, RANK=3, that is, the DMRS port allocation diagram in the case of DMRS type 2, two symbols, and three-layer transmission.

**Table 16**

| Value | Number of DMRS CDM group(s) without data | DMRS port(s) | Number of front-load symbols |
|---|---|---|---|
| 0 | 2 | 0-3 | 1 |
| 1 | 3 | 0-3 | 1 |
| 2 | 3 | 0,1,6,7 | 2 |
| 3 | 3 | 2,3,8,9 | 2 |
| 4 | 3 | 4,5,10,11 | 2 |
| 5-31 | Reserved | Reserved | Reserved |

Herein, Table 16 represents antenna port(s), transform precoder is disabled, dmrs-Type=2, maxLength=2, RANK=4, that is, the DMRS port allocation diagram in the case of DMRS type 2, two symbols, and four-layer transmission.

The PT-RS port is described below.

The number of PT-RS ports is related to the number of phase noise sources. When there are multiple independent phase noise sources, each phase noise source requires a PT-RS port for phase estimation. In the related art, one PT-RS port for downlink and two PT-RS ports for uplink are supported.

In the related art, whether to transmit PT-RS in uplink is configured through high-level parameters (DMRS-UplinkConfig, PT-RS-UplinkConfig).

For example, phaseTrackingRS is configured for UE in the high-level parameter DMRS-UplinkConfig to configure the uplink transmission PT-RS. If the high-level parameter DMRS-UplinkConfig does not include phaseTrackingRS configured for UE, PT-RS is not transmitted in the uplink transmission of the terminal.

There is an association relationship between the DMRS port and the PT-RS port, which is indicated by a PT-RS-DMRS association indication field.

In an example, if UE is configured with a parameter UL-PT-RS-present in the high-level parameters, and the number of PT-RS ports is 1 or 2, then the PT-RS-DMRS association indication field in UL DCI 0_1/0_2 indicates that a DM-RS port is associated with this PT-RS port. The specific association relationship is shown in the following table.

For the case of a single PT-RS port, Table 17 shows the association relationship between the DMRS port and the PT-RS port for uplink PT-RS port 0.

**Table 17**

| **Value** | **DMRS port** |
|---|---|
| 0 | 1^{st} scheduled DMRS port |
| 1 | 2^{nd} scheduled DMRS port |
| 2 | 3^{rd} scheduled DMRS port |
| 3 | 4^{th} scheduled DMRS port |

For the case of two PT-RS ports, Table 18 shows the association relationship between the DMRS port and the PT-RS port for uplink PT-RS port 0.

**Table 18**

| **Value of MSB** | **DMRS port** | | **Value of LSB** | **DMRS port** |
|---|---|---|---|---|
| 0 | 1^{st} DMRS port which shares PT-RS port 0 | | 0 | 1^{st} DMRS port which shares PT-RS port 1 |
| 1 | 2^{nd} DMRS port which shares PT-RS port 0 | | 1 | 2^{nd} DMRS port which shares PT-RS port 1 |

The maximum number of PT-RS ports is obtained by configuring maxNrofPorts in the high-level parameter PT-RS-UplinkConfig to 'n2'. If the maximum number of PT-RS ports indicated by n2 is 2, the network device is divided into two groups by the DMRS ports corresponding to the SRS resources, and establishes associations with the PT-RS ports respectively.

In the uplink enhancement of R18, it is to consider how to improve STxMP transmission through multi-panel/multi-TRP to support higher throughput and more reliable transmission performance.

In order to support STxMP based on single-DCI, it is to consider different association mapping indication schemes between PT-RS and DMRS under different transmission multiplexing schemes, so as to support accurate estimation of CPE in the case of multiple panels of the terminal.

Some embodiments of the present disclosure provide a scheme for supporting the terminal to determine the association relationship indication between the PT-RS port and the DMRS port in the solution of STxMP transmission. When the terminal performs STxMP transmission of PUSCH based on the S-DCI scheduling mode, the network device configures the terminal to send a PT-RS reference signal and sends indication information to the terminal, where the indication information is used to indicate the association relationship between the DMRS port and the PT-RS port when the terminal sends the PT-RS reference signal, thereby enhancing the association relationship between the DMRS port and the PT-RS port in STxMP transmission. Different association mapping indication schemes between PT-RS and DMRS are considered under different transmission multiplexing schemes, thereby supporting accurate estimation of CPE in the case of terminal having multiple panels.

FIG. 5 is a flow chart showing a method for indicating an uplink PT-RS port according to an exemplary embodiment. As shown in FIG. 5, the method for indicating the uplink PT-RS port is used in a network device and includes the following steps.

In step S11, in response to determining that a terminal performs STxMP transmission of PUSCH based on an S-DCI scheduling mode, the terminal is configured to send a PT-RS reference signal.

In step S12, indication information is sent to the terminal, where the indication information is used to indicate an association relationship between a DMRS port and a PT-RS port when the terminal sends the PT-RS reference signal.

In some embodiments of the present disclosure, when the network device determines that the terminal performs STxMP transmission of PUSCH based on the S-DCI scheduling mode, the PT-RS transmission function of the terminal is configured to be activated, thereby configuring the terminal to send a PT-RS reference signal. The network device sends indication information to the terminal for indicating the association relationship between the DMRS port and the PT-RS port when the terminal sends the PT-RS reference signal, so as to enhance the association relationship between the DMRS port and the PT-RS port in the STxMP transmission.

In an implementation mode of the method for indicating uplink PT-RS port according to some embodiments of the present disclosure, when the network device determines that the terminal performs STxMP transmission of PUSCH based on the S-DCI scheduling mode, the terminal is configured to send a PT-RS reference signal and indication information is sent to the terminal. The indication information includes a PT-RS-DMRS association relationship indication field, and different indication modes of the PT-RS-DMRS association relationship indication field are used to indicate different association relationships between the PT-RS port and the DMRS port.

In an implementation mode of the method for indicating uplink PT-RS port according to some embodiments of the present disclosure, the indication mode of the association relationship between the DMRS port and the PT-RS port is determined based on at least one of the following information:
A, a maximum number of PT-RS ports;
B, a transmission mode adopted by the terminal for uplink transmission;
C, an actual transmission rank of the terminal.

In an implementation mode of the method for indicating uplink PT-RS port according to some embodiments of the present disclosure, the indication mode of the association relationship between the DMRS port and the PT-RS port is determined based on the maximum number of PT-RS ports.

In the method for indicating uplink PT-RS port according to some embodiments of the present disclosure, the network device configures PT-RS sending to be activated, and also configures the maximum number of PT-RS ports "maxNrofPorts".

The maximum number of PT-RS ports is 1 or 2.

In an implementation mode, the network device configures a default value of the maximum number of PT-RS ports as 2.

In some embodiments of the present disclosure, the indication mode of the association relationship between the DMRS port and the PT-RS port is determined based on the maximum number of PT-RS ports, and based on the maximum number of PT-RS ports being 1 or 2, there are different modes for determining the association relationship between the corresponding PT-RS port and the DMRS port.

In an implementation mode of the method for indicating uplink PT-RS port according to some embodiments of the present disclosure, the indication mode of the association relationship between the DMRS port and the PT-RS port is determined based on the maximum number of PT-RS ports and the actual transmission rank.

In an implementation mode of the method for indicating uplink PT-RS port according to some embodiments of the present disclosure, in response to the maximum number of PT-RS ports being 1, the indication mode for the association relationship between the DMRS port and the PT-RS port is determined based on the actual transmission rank.

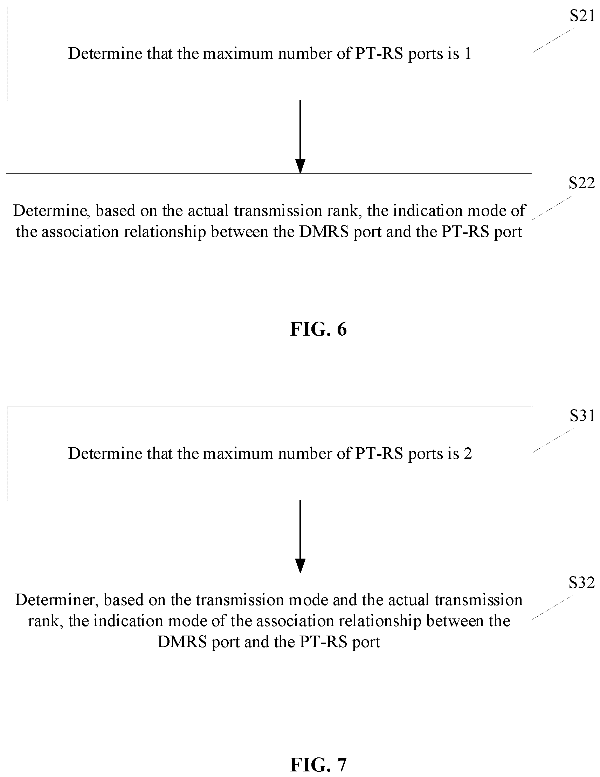

FIG. 6 is a flow chart showing a method for determining an indication mode of an association relationship between a DMRS port and a PT-RS port according to an exemplary embodiment. As shown in FIG. 6, the method includes the following steps.

In step S21, it is determined that the maximum number of PT-RS ports is 1.

In step S22, based on the actual transmission rank, the indication mode of the association relationship between the DMRS port and the PT-RS port is determined.

Herein, the indication mode of the PT-RS-DMRS association relationship indication field in some embodiments of the present disclosure may be, for example, through bit indication, and the indication mode can also be understood as bit overhead.

In an implementation mode of the method for indicating uplink PT-RS port according to some embodiments of the present disclosure, in response to the actual transmission rank being greater than 1, the PT-RS-DMRS association relationship indication field is indicated by 2 bits, and the number of DMRS ports is the total number of all DMRS ports allocated and indicated for the terminal by S-DCI.

In an example, in a scheme in which a terminal supporting STxMP transmission determines the association relationship indication between PT-RS and DMRS, when the network device configures PT-RS transmission to be activated and configures the maximum number of PT-RS ports "maxNrofPorts" to 1, that is, when PT-RS is a single port, for the case where the transmission rank is greater than 1, the association relationship between PT-RS and DMRS is indicated using 2 bits.

Herein, when the actual transmission rank is greater than 1 and the PT-RS-DMRS association relationship indication field is indicated by 2 bits, the mapping mode of the PT-RS-DMRS association relationship indication field is the same as the mapping mode of PT-RS-DMRS association relationship indication field in the case of a PT-RS single port shown in Table 17. In this case, the DMRS port includes all DMRS ports scheduled to the terminal, that is, the number of DMRS ports is the total number of all DMRS ports assigned to the terminal by S-DCI.

In an implementation mode of the method for indicating uplink PT-RS port according to some embodiments of the present disclosure, in response to the maximum number of PT-RS ports being 2, the indication mode for the association relationship between the DMRS port and the PT-RS port is determined based on the transmission mode and the actual transmission rank.

FIG. 7 is a flow chart showing a method for determining an indication mode of an association relationship between a DMRS port and a PT-RS port according to an exemplary embodiment. As shown in FIG. 7, the method includes the following steps.

In step S31, it is determined that the maximum number of PT-RS ports is 2.

In step S32, based on the transmission mode and the actual transmission rank, the indication mode of the association relationship between the DMRS port and the PT-RS port is determined.

In some embodiments of the present disclosure, the transmission mode adopted by the terminal for uplink transmission includes SDM, FDM or SFN.

In some embodiments of the present disclosure, corresponding to different transmission modes and/or actual transmission ranks, the indication modes of the PT-RS-DMRS association relationship indication field corresponding to different determination modes.

Herein, the indication mode of the PT-RS-DMRS association relationship indication field in some embodiments of the present disclosure may be, for example, through bit indication, and the indication mode can also be understood as bit overhead.

In an implementation mode, in response to the transmission mode being the SDM transmission mode, and the actual transmission rank being 2, the PT-RS-DMRS association relationship indication field is indicated by 0 bit.

In an example, in a scheme in which a terminal supporting STxMP transmission determines the association relationship indication between PT-RS and DMRS, when the network device configures PT-RS transmission to be activated and configures the maximum number of PT-RS ports "maxNrofPorts" to 2, that is, supporting a maximum of 2 PT-RS ports, when the transmission scheme is SDM, it is to determine the association relationship between the PT-RS ports and DMRS corresponding to different CWs/panels/TRPs/TCIs.

In an example, when the transmission scheme is SDM and the transmission rank is 2, the actual corresponding transmission RANK combination of PUSCH on two different panels is 1+1. Therefore, for each panel, RANK is 1, so there is no need to indicate the PT-RS-DMRS association relationship, that is, the PT-RS-DMRS association relationship indication field is indicated by 0 bit.

In an implementation mode, in response to the transmission mode being the SDM transmission mode, and the actual transmission rank being greater than 2, the indication mode of the PT-RS-DMRS association relationship indication field is determined based on the combination of the transmission rank of PUSCH transmission corresponding to different TRP/Panel/TCI/TO supported by the terminal.

In an implementation mode, in response to that the transmission rank combinations of PUSCH transmission corresponding to different TRP/Panel/TCI/TO supported by the terminal include a combination of transmission rank 1 and transmission rank 1, a combination of transmission rank 1 and transmission rank 2, a combination of transmission rank 2 and transmission rank 1, and a combination of transmission rank 2 and transmission rank 2, that is, the RANK combination {1+1, 1+2, 2+1, 2+2} is supported; and that the combination of transmission rank 1 and transmission rank 3 and the combination of transmission rank 3 and transmission layer 1 are not supported, that is, the RANK combination {1+3, 3+1} is not supported, the PT-RS-DMRS association relationship indication field is indicated by 2 bits, and different bits are used to indicate different PT-RS ports of different panels.

In an embodiment of the present disclosure, when the transmission scheme is SDM and the transmission rank is greater than 2, for a terminal that only supports the RANK combination {1+1, 1+2, 2+1, 2+2}, the PT-RS-DMRS association relationship indication field is indicated by 2 bits, where the high-order 1 bit is used to indicate the first PT-RS port of the first panel among two front or rear DMRS antenna ports that share the first PT-RS port, and the low-order 1 bit is used to indicate the second PT-RS port of the second panel among two front or rear DMRS antenna ports that share the second PT-RS port.

In an example, when the transmission scheme is SDM and the transmission rank is greater than 2, for a terminal that only supports the RANK combination {1+1, 1+2, 2+1, 2+2}, each panel requires 1 bit indication, and a total of 2 bits are required. For example, by default, the most significant bit (MSB) indicates the PT-RS port 0 on the first panel, and the least significant bit (LSB) indicates the PT-RS port 1 on the second panel. Indication mode of the PT-RS-DMRS association relationship indication field is as shown in Table 19.

**Table 19**

| **Value of MSB** | **DMRS port scheduled for the first panel** | | **Value of LSB** | **DMRS port scheduled for the second panel** |
|---|---|---|---|---|
| 0 | 1^{st} DMRS port which shares PT-RS port 0 | | 0 | 1^{st} DMRS port which shares PT-RS port 1 |
| 1 | 2^{nd} DMRS port which shares PT-RS port 0 | | 1 | 2^{nd} DMRS port which shares PT-RS port 1 |

In an implementation mode, in response to that the transmission rank combinations of PUSCH transmission corresponding to different TRP/Panel/TCI/TO supported by the terminal include the combination of transmission rank 1 and transmission rank 1, the combination of transmission rank 1 and transmission rank 2, the combination of transmission rank 2 and transmission rank 1, and the combination of transmission rank 2 and transmission rank 2, and that the combination of transmission rank 1 and transmission rank 3 and the combination of transmission rank 3 and transmission rank 1 are supported, that is, the RANK combination {1+1, 1+2, 2+1, 2+2} is supported and the RANK combination {1+3, 3+1} is supported, the PT-RS-DMRS association relationship indication field indicates, through 2 bits, different PT-RS ports in the case of the RANK combination {2+2}, or different PT-RS ports in the case of the RANK combination {1+3, 3+1}.

In some embodiments of the present disclosure, for the case where the RANK combination {1+1, 1+2, 2+1, 2+2} is supported and the RANK combination {1+3, 3+1} is supported, the PT-RS-DMRS association relationship indication field indicates different PT-RS ports in the case of RANK combination {2+2} through different bits in 2 bits.

In some embodiments of the present disclosure, for the case where the RANK combination {1+3, 3+1} is supported and the RANK combination {1+1, 1+2, 2+1, 2+2} is supported, the PT-RS-DMRS association relationship indication field indicates different PT-RS ports in the case of RANK combination {2+2} through different bits in 2 bits, where the high-order 1 bit is used to indicate the first PT-RS port of the first panel among the front or rear two DMRS antenna ports that share the first PT-RS port, and the low-order 1 bit is used to indicate the second PT-RS port of the second panel among the front or rear two DMRS antenna ports that share the second PT-RS port.

In an example, when the transmission scheme is SDM and the transmission rank is greater than 2, for a terminal that supports the RANK combination {1+3, 3+1} based on the RANK combination {1+1, 1+2, 2+1, 2+2}, for the RANK combination {2+2}, 2 bits are required to indicate the PT-RS on different panels. Each panel requires 1 bit for indication, and a total of 2 bits are required. For example, by default, the MSB indicates the PT-RS port 0 on the first panel, and the LSB indicates the PT-RS port 1 on the second panel.

In some embodiments of the present disclosure, for the case where the RANK combination {1+3, 3+1} is supported on the basis of the RANK combination {1+1, 1+2, 2+1, 2+2}, the PT-RS-DMRS association relationship indication field indicates, through 2 bits, the association relationship between the DMRS port and the PT-RS port on the panel with a transmission rank greater than 1.

In some embodiments of the present disclosure, when the transmission scheme is SDM and the transmission rank is greater than 2, for the case where the RANK combination {1+3, 3+1} is supported on the basis of the RANK combination {1+1, 1+2, 2+1, 2+2}, the PT-RS-DMRS association relationship indication field is indicated by 2 bits, and the 2 bits are used to indicate the association relationship between the PT-RS port corresponding to the panel whose actual transmission rank is 3 and the 3 DMRS ports corresponding to the panel. The number of PT-RS port indication bits corresponding to the panel, whose actual transmission rank is 1, is 0.

In an example, when the transmission scheme is SDM and the transmission rank is greater than 2, for a terminal that supports the RANK combination {1+3, 3+1} based on the RANK combination {1+1, 1+2, 2+1, 2+2}, for the RANK combination {1+3, 3+1}, 2 bits are required to indicate the association relationship between the PT-RS port sent on the panel with RANK>1 and the DMRS, and the PT-RS port sent on the other panel with RANK=1 does not need to be indicated. Indication mode of the PT-RS-DMRS association relationship indication field is as shown in Table 20.

**Table 20**

| **Value of MSB** | **DMRS port scheduled for the first panel** | | **Value of LSB** | **DMRS port scheduled for the second panel** |
|---|---|---|---|---|
| 0 | 1^{st} DMRS port which shares PT-RS port 0 | | 0 | 1^{st} DMRS port which shares PT-RS port 1 |
| 1 | 2^{nd} DMRS port which shares PT-RS port 0 | | 1 | 2^{nd} DMRS port which shares PT-RS port 1 |
| 2 | 3^{rd} DMRS port which shares PT-RS port 0 | | 2 | 3^{rd} DMRS port which shares PT-RS port 1 |
| 3 | reserved | | 3 | reserved |

In Table 20, in the multi-panel co-transmission mode, the maximum number of DMRS supported by each panel is 3. The PT-RS port is 0 or 1.

In an implementation mode, in response to the transmission mode being an FDM transmission mode or an SFN transmission mode, and the actual transmission rank being greater than 1, the PT-RS-DMRS association relationship indication field indicates different PT-RS ports of different panels through different bits.

In an example, when the transmission scheme is FDM or SFN and the transmission rank is greater than 1, it is to indicate the association relationship between the PT-RS and DMRS ports for two panels respectively.

In an implementation mode, in response to the transmission mode being the FDM transmission mode or the SFN transmission mode, and the actual transmission rank being 2, the PT-RS-DMRS association relationship indication field indicates different PT-RS ports of different panels through 2 bits.

In an example, when the transmission scheme is FDM or SFN and the transmission rank is 2, each panel needs 1 bit for indication. For example, by default, the MSB indicates the PT-RS port 0 on the first panel, and the LSB indicates the PT-RS port 1 on the second panel. Indication mode of the PT-RS-DMRS association relationship indication field is shown in Table 19.

In an implementation mode of the disclosed embodiments, in response to the transmission mode being the FDM transmission mode or the SFN transmission mode, and the actual transmission rank being greater than 2, the PT-RS-DMRS association relationship indication field indicates different PT-RS ports of different panels through 4 bits.

In an example, when the transmission scheme is FDM or SFN and the transmission rank is greater than 2, each panel requires 2 bits for indication, and the existing single-port PT-RS table can be extended and designed. Indication mode of the PT-RS-DMRS association relationship indication field is shown in Table 21.

**Table 21**

| **Value of MSB** | **DMRS port scheduled for the first panel** | | **Value of LSB** | **DMRS port scheduled for the second panel** |
|---|---|---|---|---|
| 0 | 1^{st} DMRS port which shares PT-RS port 0 | | 0 | 1^{st} DMRS port which shares PT-RS port 1 |
| 1 | 2^{nd} DMRS port which shares PT-RS port 0 | | 1 | 2^{nd} DMRS port which shares PT-RS port 1 |
| 2 | 3^{rd} DMRS port which shares PT-RS port 0 | | 2 | 3^{rd} DMRS port which shares PT-RS port 1 |
| 3 | reserved | | 3 | reserved |

In Table 21, in the multi-panel co-transmission mode, the maximum number of DMRS supported by each panel is 3. The PT-RS ports are 0 and 1.

In an implementation mode of the disclosed embodiments, in response to the transmission mode being the FDM transmission mode or the SFN transmission mode, and the actual transmission rank being greater than 2, the PT-RS-DMRS association relationship indication field indicates different PT-RS ports of different panels through 2 bits.

In an implementation mode, the transmission mode is the FDM transmission mode or the SFN transmission mode, the actual transmission rank is greater than 2, and the PT-RS-DMRS association relationship indication field is indicated by 2 bits, where the high-order 1 bit is used to indicate the first PT-RS port of the first panel among the front or rear 2 DMRS antenna ports that share the first PT-RS port, and the low-order 1 bit is used to indicate the second PT-RS port of the second panel among the front or rear 2 DMRS antenna ports that share the second PT-RS port.

In an example, the transmission mode is FDM transmission mode or SFN transmission mode, the actual transmission rank is greater than 2, and the PT-RS-DMRS association relationship indication field is indicated by 2 bits, where 1 bit MSB indicates an associated PT-RS port 0 among the first 2/last 2 DMRS ports of the first panel, and 1 bit LSB indicates an associated PT-RS port 1 among the first 2/last 2 DMRS ports of the second panel.

Based on the method for indicating the uplink PT-RS port according to some embodiments of the present disclosure, when the terminal performs STxMP transmission of PUSCH based on the S-DCI scheduling mode, the network device configures the terminal to send a PT-RS reference signal and sends indication information to the terminal, where the indication information is used to indicate the association relationship between the DMRS port and the PT-RS port when the terminal sends the PT-RS reference signal, thereby enhancing the association relationship between the DMRS port and the PT-RS port in STxMP transmission. Different association mapping indication schemes between PT-RS and DMRS are considered under different transmission multiplexing schemes, thereby supporting accurate estimation of CPE in the case of terminal having multiple panels.

Based on the same concept, some embodiments of the present disclosure also provide a method for indicating an uplink PT-RS port applied to a terminal.

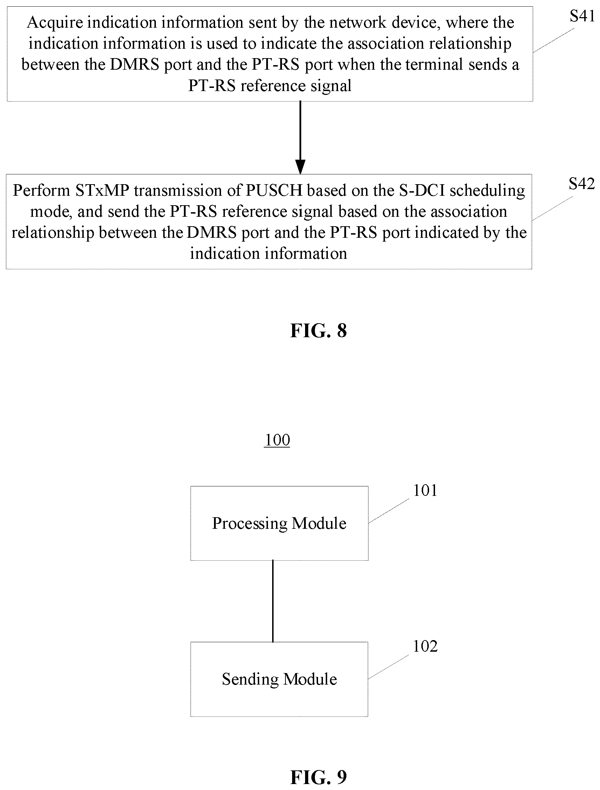

FIG. 8 is a flow chart showing a method for indicating an uplink PT-RS port according to an exemplary embodiment. As shown in FIG. 8, the method for indicating the uplink PT-RS port is used in a terminal and includes the following steps.

In step S41, indication information sent by a network device is acquired, where the indication information is used to indicate an association relationship between a DMRS port and a PT-RS port when the terminal sends a PT-RS reference signal.

In step S42, STxMP transmission of PUSCH is performed based on an S-DCI scheduling mode, and a PT-RS reference signal is sent based on the association relationship between the DMRS port and the PT-RS port indicated by the indication information.

According to some embodiments of the present disclosure, the terminal performs STxMP transmission of PUSCH based on the S-DCI scheduling mode, and is configured to receive indication information sent by the network device when sending the PT-RS reference signal. The indication information is used to indicate the association relationship between the DMRS port and the PT-RS port when the terminal sends the PT-RS reference signal, thereby enhancing the association relationship between the DMRS port and the PT-RS port in the STxMP transmission.

In an implementation mode, the indication information includes a PT-RS-DMRS association relationship indication field, and different indication modes of the PT-RS-DMRS association relationship indication field are used to indicate different association relationships between PT-RS port and DMRS port.

In an implementation mode of the method for indicating uplink PT-RS port according to some embodiments of the present disclosure, the indication mode of the association relationship between the DMRS port and the PT-RS port is determined based on at least one of the following information:
A, a maximum number of PT-RS ports;
B, a transmission mode adopted by the terminal for uplink transmission;
C, an actual transmission rank of the terminal.

In an implementation mode of the method for indicating uplink PT-RS port according to some embodiments of the present disclosure, the indication mode of the association relationship between the DMRS port and the PT-RS port is determined based on the maximum number of PT-RS ports.

In the method for indicating uplink PT-RS port according to some embodiments of the present disclosure, the network device configures PT-RS sending to be activated, and also configures the maximum number of PT-RS ports "maxNrofPorts".

The maximum number of PT-RS ports is 1 or 2.

In an implementation mode, the network device configures a default value of the maximum number of PT-RS ports as 2.

In some embodiments of the present disclosure, the indication mode of the association relationship between the DMRS port and the PT-RS port is determined based on the maximum number of PT-RS ports, and based on the maximum number of PT-RS ports being 1 or 2, there are different modes for determining the association relationship between the corresponding PT-RS port and the DMRS port.

In an implementation mode of the method for indicating uplink PT-RS port according to some embodiments of the present disclosure, the indication mode of the association relationship between the DMRS port and the PT-RS port is determined based on the maximum number of PT-RS ports and the actual transmission rank.

In an implementation mode of the method for indicating uplink PT-RS port according to some embodiments of the present disclosure, in response to the maximum number of PT-RS ports being 1, the indication mode for the association relationship between the DMRS port and the PT-RS port is determined based on the actual transmission rank.

In some embodiments of the present disclosure, the transmission mode adopted by the terminal for uplink transmission includes SDM, FDM or SFN.

In some embodiments of the present disclosure, corresponding to different transmission modes and/or actual transmission ranks, the indication modes of the PT-RS-DMRS association relationship indication field correspond to different determination modes.

Herein, the indication mode of the PT-RS-DMRS association relationship indication field in some embodiments of the present disclosure can be, for example, through bit indication, and the indication mode can also be understood as bit overhead.

In an implementation mode, in response to the transmission mode being the SDM transmission mode, and the actual transmission rank being 2, the PT-RS-DMRS association relationship indication field is indicated by 0 bit.

In an implementation mode, in response to the transmission mode being the SDM transmission mode, and the actual transmission rank being greater than 2, the indication mode of the PT-RS-DMRS association relationship indication field is determined based on the transmission rank combinations of PUSCH transmission corresponding to different TRP/Panel/TCI/TO supported by the terminal.

In an implementation mode, in response to that the transmission rank combinations of PUSCH transmission corresponding to different TRP/Panel/TCI/TO supported by the terminal include a combination of transmission rank 1 and transmission rank 1, a combination of transmission rank 1 and transmission rank 2, a combination of transmission rank 2 and transmission rank 1, and a combination of transmission rank 2 and transmission rank 2, that is, the RANK combination {1+1, 1+2, 2+1, 2+2} is supported; and that the combination of transmission rank 1 and transmission rank 3 and the combination of transmission rank 3 and transmission layer 1 are not supported, that is, the RANK combination {1+3, 3+1} is not supported, the PT-RS-DMRS association relationship indication field is indicated by 2 bits, and different bits are used to indicate different PT-RS ports of different panels.

In an embodiment of the present disclosure, when the transmission scheme is SDM and the transmission rank is greater than 2, for a terminal that only supports the RANK combination {1+1, 1+2, 2+1, 2+2}, the PT-RS-DMRS association relationship indication field is indicated by 2 bits, where the high-order 1 bit is used to indicate the first PT-RS port of the first panel among two front or rear DMRS antenna ports that share the first PT-RS port, and the low-order 1 bit is used to indicate the second PT-RS port of the second panel among two front or rear DMRS antenna ports that share the second PT-RS port.

In an implementation mode, in response to that the transmission rank combinations of PUSCH transmission corresponding to different TRP/Panel/TCI/TO supported by the terminal include the combination of transmission rank 1 and transmission rank 1, the combination of transmission rank 1 and transmission rank 2, the combination of transmission rank 2 and transmission rank 1, and the combination of transmission rank 2 and transmission rank 2, and that the combination of transmission rank 1 and transmission rank 3 and the combination of transmission rank 3 and transmission rank 1 are supported, that is, the RANK combination {1+1, 1+2, 2+1, 2+2} is supported and the RANK combination {1+3, 3+1} is supported, the PT-RS-DMRS association relationship indication field indicates, through 2 bits, different PT-RS ports in the case of the RANK combination {2+2}, or different PT-RS ports in the case of the RANK combination {1+3, 3+1}.

In some embodiments of the present disclosure, for the case where the RANK combination {1+1, 1+2, 2+1, 2+2} is supported and the RANK combination {1+3, 3+1} is supported, the PT-RS-DMRS association relationship indication field indicates different PT-RS ports in the case of RANK combination {2+2} through different bits in 2 bits.

In some embodiments of the present disclosure, for the case where the RANK combination {1+3, 3+1} is supported and the RANK combination {1+1, 1+2, 2+1, 2+2} is supported, the PT-RS-DMRS association relationship indication field indicates different PT-RS ports in the case of RANK combination {2+2} through different bits in 2 bits, where the high-order 1 bit is used to indicate the first PT-RS port of the first panel among the front or rear two DMRS antenna ports that share the first PT-RS port, and the low-order 1 bit is used to indicate the second PT-RS port of the second panel among the front or rear two DMRS antenna ports that share the second PT-RS port.

In an implementation mode, in response to the transmission mode being the FDM transmission mode or the SFN transmission mode, and the actual transmission rank being greater than 1, the PT-RS-DMRS association relationship indication field indicates different PT-RS ports of different panels through different bits.

In an example, when the transmission scheme is FDM or SFN and the transmission rank is greater than 1, it is to indicate the association relationship between the PT-RS and DMRS ports for two panels respectively.

In an implementation mode, in response to the transmission mode being the FDM transmission mode or the SFN transmission mode, and the actual transmission rank being 2, the PT-RS-DMRS association relationship indication field indicates different PT-RS ports of different panels through 2 bits.

In an implementation mode of the disclosed embodiments, in response to the transmission mode being the FDM transmission mode or the SFN transmission mode, and the actual transmission rank being greater than 2, the PT-RS-DMRS association relationship indication field indicates different PT-RS ports of different panels through 4 bits.

In an implementation mode of the disclosed embodiments, in response to the transmission mode being the FDM transmission mode or the SFN transmission mode, and the actual transmission rank being greater than 2, the PT-RS-DMRS association relationship indication field indicates different PT-RS ports of different panels through 2 bits.

In an implementation mode, the transmission mode is the FDM transmission mode or the SFN transmission mode, the actual transmission rank is greater than 2, and the PT-RS-DMRS association relationship indication field is indicated by 2 bits, where the high-order 1 bit is used to indicate the first PT-RS port of the first panel among the front or rear 2 DMRS antenna ports that share the first PT-RS port, and the low-order 1 bit is used to indicate the second PT-RS port of the second panel among the front or rear 2 DMRS antenna ports that share the second PT-RS port.

Based on the method for indicating the uplink PT-RS port according to some embodiments of the present disclosure, when the terminal performs STxMP transmission of PUSCH based on the S-DCI scheduling mode, the terminal is configured to send a PT-RS reference signal and receive indication information sent by the network device, where the indication information is used to indicate the association relationship between the DMRS port and the PT-RS port when the terminal sends the PT-RS reference signal, thereby enhancing the association relationship between the DMRS port and the PT-RS port in STxMP transmission. Different association mapping indication schemes between PT-RS and DMRS are considered under different transmission multiplexing schemes, thereby supporting accurate estimation of CPE in the case of terminal having multiple panels.

It should be noted that the method for indicating the uplink PT-RS port applied to the network device in some embodiments of the present disclosure is similar to the execution process of the method for indicating the uplink PT-RS port applied to the terminal. The description of the above-mentioned related embodiments can be referred to for details, which will not be repeated here.

The method for indicating uplink PT-RS port provided in the present disclosure is applicable to the process of implementing the uplink PT-RS port indication by the interaction between the terminal and the network device. In the method of implementing the uplink PT-RS port indication by the interaction between the terminal and the network device, the terminal and the network device respectively have the relevant functions of implementing the method for indicating uplink PT-RS port involved in the above-mentioned embodiments, which will not be repeated here.

It should be noted that those skilled in the art can understand that the various implementation modes/embodiments involved in the embodiments of the present disclosure can be used in conjunction with the aforementioned embodiments or can be used independently. Whether used alone or in conjunction with the aforementioned embodiments, the implementation principle is similar. In the implementation of the present disclosure, some embodiments are described in terms of implementation modes used together. Also, those skilled in the art can understand that such examples are not limitations of the embodiments of the present disclosure.

Based on the same concept, some embodiments of the present disclosure also provide an apparatus for indicating an uplink PT-RS port.

It is to be understood that the apparatus for indicating the uplink PT-RS port provided in some embodiments of the present disclosure includes hardware structures and/or software modules corresponding to the execution of each function in order to realize the above functions. In combination with the units and algorithm steps of each example disclosed in some embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solution. Those skilled in the art can use different manners to implement the described functions for each specific application, but such implementation should not be considered to go beyond the scope of the technical solution according to the embodiments of the present disclosure.

FIG. 9 is a block diagram of an apparatus for indicating an uplink PT-RS port according to an exemplary embodiment. Referring to FIG. 9, an apparatus 100 for indicating an uplink PT-RS port includes a processing module 101 and a sending module 102.

The processing module 101 is configured to configure, in response to determining that a terminal performs STxMP of a PUSCH based on an S-DCI scheduling mode, the terminal to send a PT-RS reference signal; and the sending module 102 is configured to send indication information to the terminal, where the indication information is used to indicate an association relationship between a DMRS port and a PT-RS port when the terminal sends the PT-RS reference signal.

In an implementation mode, the indication information includes a PT-RS-DMRS association relationship indication field, and different indication modes of the PT-RS-DMRS association relationship indication field are used to indicate different association relationships between the PT-RS port and the DMRS port.

In an implementation mode, an indication mode of the association relationship between the DMRS port and the PT-RS port is determined based on at least one of following information:
a maximum number of PT-RS ports; a transmission mode adopted by the terminal for uplink transmission; an actual transmission rank of the terminal.

In an implementation mode, in response to the maximum number of PT-RS ports being 1, the indication mode of the association relationship between the DMRS port and the PT-RS port is determined based on the actual transmission rank.

In an implementation mode, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

In an implementation mode, in response to the maximum number of PT-RS ports being 2, the indication mode of the association relationship between the DMRS port and the PT-RS port is determined based on the transmission mode and the actual transmission rank.

In an implementation mode, in response to the transmission mode being an SDM transmission mode and the actual transmission rank being 2, the PT-RS-DMRS association relationship indication field is indicated by 0 bit.

In an implementation mode, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/TCI/TO supported by the terminal.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

In an implementation mode, in response to the transmission mode being an FDM transmission mode or an SFN transmission mode, and the actual transmission rank being greater than 1, the PT-RS-DMRS association relationship indication field indicates, through different bits, different PT-RS ports of different panels.

In an implementation mode, the actual transmission rank is 2, and the PT-RS-DMRS association relationship indication field indicates the different PT-RS ports of different panels through 2 bits.

In an implementation mode, the actual transmission rank is greater than 2, and the PT-RS-DMRS association relationship indication field indicates the different PT-RS ports of different panels through 4 bits.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

In an implementation mode, the 2 bits are used to indicate association relationship between PT-RS ports, corresponding to a panel with the actual transmission rank being 3, and 3 corresponding DMRS ports on the panel; and an indication bit number of a PT-RS port, corresponding to a panel with the actual transmission rank being 1, is 0.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

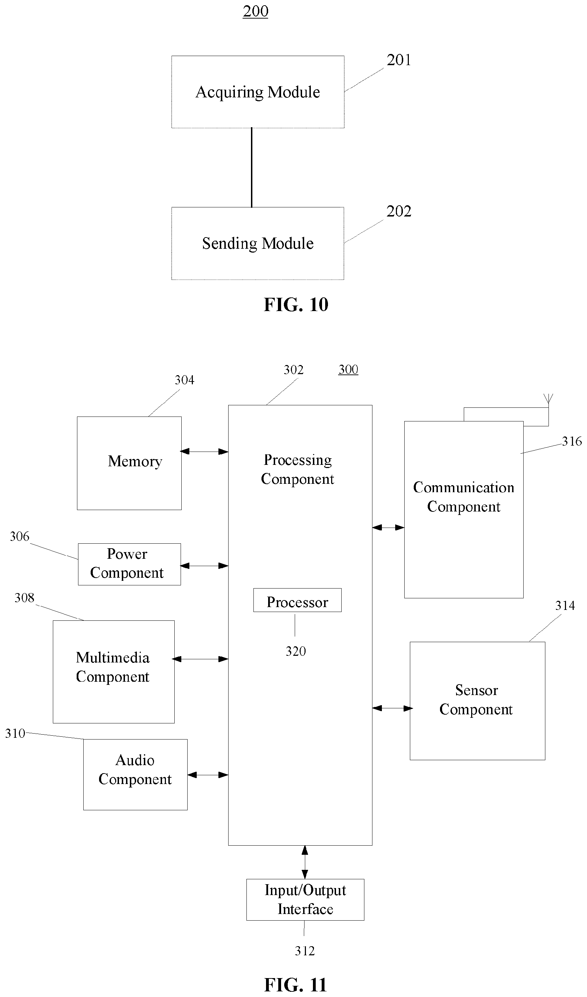

FIG. 10 is a block diagram of an apparatus for indicating an uplink PT-RS port according to an exemplary embodiment. Referring to FIG. 10, an apparatus 200 for indicating an uplink PT-RS port includes an acquiring module 201 and a sending module 202.

The acquisition module 201 is configured to acquire indication information sent by a network device, wherein the indication information is used to indicate an association relationship between a DMRS port and a PT-RS port when the terminal sends a PT-RS reference signal; the sending module 202 is configured to perform STxMP of a PUSCH based on an S-DCI scheduling mode, and send the PT-RS reference signal based on the association relationship between the DMRS port and the PT-RS port indicated by the indication information.

In an implementation mode, the indication information includes a PT-RS-DMRS association relationship an indication field, and different indication modes of the PT-RS-DMRS association relationship indication field are used to indicate different association relationships between the PT-RS port and the DMRS port.

In an implementation mode, an indication mode of the association relationship between the DMRS port and the PT-RS port is determined based on at least one of following information:
a maximum number of PT-RS ports; a transmission mode adopted by the terminal for uplink transmission; an actual transmission rank of the terminal.

In an implementation mode, in response to the maximum number of PT-RS ports being 1, the indication mode of the association relationship between the DMRS port and the PT-RS port is determined based on the actual transmission rank.

In an implementation mode, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

In an implementation mode, in response to the maximum number of PT-RS ports being 2, the indication mode of the association relationship between the DMRS port and the PT-RS port is determined based on the transmission mode and the actual transmission rank.

In an implementation mode, in response to the transmission mode being an SDM transmission mode and the actual transmission rank being 2, the PT-RS-DMRS association relationship indication field is indicated by 0 bit.

In an implementation mode, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/TCI/TO supported by the terminal.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

In an implementation mode, in response to the combination of transmission ranks corresponding to PUSCH transmission of different TRP/Panel/TCI/TO supported by the terminal including a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

In an implementation mode, in response to the transmission mode being an FDM transmission mode or an SFN transmission mode, and the actual transmission rank being greater than 1, the PT-RS-DMRS association relationship indication field indicates, through different bits, different PT-RS ports of different panels.

In an implementation mode, the actual transmission rank is 2, and the PT-RS-DMRS association relationship indication field indicates the different PT-RS ports of different panels through 2 bits.

In an implementation mode, the actual transmission rank is greater than 2, and the PT-RS-DMRS association relationship indication field indicates the different PT-RS ports of different panels through 4 bits.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

In an implementation mode, the 2 bits are used to indicate association relationship between PT-RS ports, corresponding to a panel with the actual transmission rank being 3, and 3 corresponding DMRS ports on the panel; and
an indication bit number of a PT-RS port, corresponding to a panel with the actual transmission rank being 1, is 0.

In an implementation mode, a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

Regarding the apparatus in the above embodiments, the specific manner in which each module performs operations has been described in detail in some embodiments of the methods, and will not be elaborated here.

FIG. 11 is a block diagram showing an apparatus 300 for indicating an uplink PT-RS port according to some embodiments. For example, the apparatus 300 may be a mobile phone, a computer, a digital broadcast terminal, a messaging device, a game console, a tablet device, a medical device, a fitness device, a personal digital assistant, and the like.

Referring to FIG. 11, the apparatus 300 may include one or more of the following components: processing component 302, memory 304, power component 306, multimedia component 308, audio component 310, input/output (I/O) interface 312, sensor component 314, and communication component 316.

The processing component 302 generally controls the overall operation of the apparatus 300, such as operations associated with display, phone calls, data communications, camera operations, and recording operations. The processing component 302 may include one or more processors 320 to execute instructions to perform all or some of the steps of the methods described above. Additionally, the processing component 302 may include one or more modules that facilitate interaction between the processing component 302 and other components. For example, the processing component 302 may include a multimedia module to facilitate interaction between the multimedia component 308 and the processing component 302.

The memory 304 is configured to store various types of data to support operation at the apparatus 300. Examples of such data include instructions, contact data, phonebook data, messages, pictures, videos, and the like for any application or method operating on the apparatus 300. The memory 304 may be implemented by any type of volatile or non-volatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic or optical disk.

The power component 306 provides power to various components of the apparatus 300. The power component 306 may include a power management system, one or more power sources, and other components associated with generating, managing, and distributing power to the apparatus 300.

The multimedia component 308 includes a screen that provides an output interface between the apparatus 300 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 308 includes a front camera and/or a rear camera. When the apparatus 300 is in an operation mode, such as a shooting mode or a video mode, the front camera and/or the rear camera may receive external multimedia data. Each of the front and rear cameras may be a fixed optical lens system or have focal length and optical zoom capability.

The audio component 310 is configured to output and/or input audio signals. For example, the audio component 310 includes a microphone (MIC) that is configured to receive external audio signals when the apparatus 300 is in operating modes, such as calling mode, recording mode, and voice recognition mode. The received audio signal may be further stored in the memory 304 or transmitted via the communication component 316. In some embodiments, the audio component 310 also includes a speaker for outputting audio signals.

The I/O interface 312 provides an interface between the processing component 302 and a peripheral interface module, which may be a keyboard, a click wheel, a button, or the like. These buttons may include, but are not limited to: home button, volume buttons, start button, and lock button.

The sensor assembly 314 includes one or more sensors for providing status assessments of various aspects of the apparatus 300. For example, the sensor assembly 314 can detect the open/closed state of the apparatus 300, the relative positioning of components, such as the display and keypad of the apparatus 300. The sensor assembly 314 can also detect a change in the position of the apparatus 300 or a component of the apparatus 300, the presence or absence of user contact with the apparatus 300, the orientation or acceleration/deceleration of the apparatus 300, and the temperature change of the apparatus 300. The sensor assembly 314 may include a proximity sensor configured to detect the presence of nearby objects in the absence of any physical contact. The sensor assembly 314 may also include a light sensor, such as a CMOS or CCD image sensor, for use in imaging applications. In some embodiments, the sensor assembly 314 may also include an acceleration sensor, a gyroscope sensor, a magnetic sensor, a pressure sensor, or a temperature sensor.

The communication component 316 is configured to facilitate wired or wireless communication between the apparatus 300 and other devices. The apparatus 300 may access wireless networks based on communication standards, such as WiFi, 2G or 3G, or a combination thereof. In some embodiments, the communication component 316 receives broadcast signals or broadcast related information from an external broadcast management system via a broadcast channel. In some embodiments, the communication component 316 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, which are configured to perform the forgoing methods.

In some embodiments, there is also provided a non-transitory computer-readable storage medium including instructions, such as the memory 304 including instructions, executable by the processor 320 of the apparatus 300 to perform the method described above. For example, the non-transitory computer-readable storage medium may be ROM, random access memory (RAM), CD-ROM, magnetic tape, floppy disk, optical data storage device, and the like.

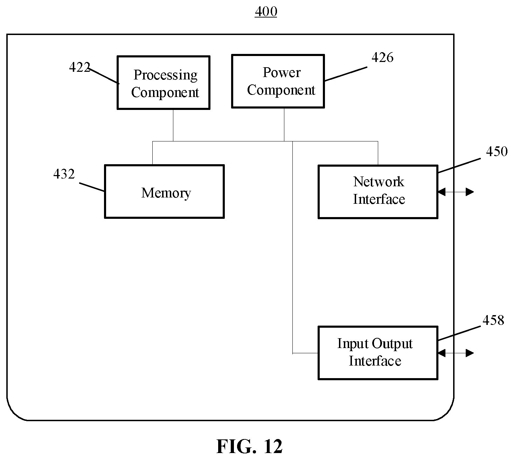

FIG. 12 is a block diagram of an apparatus 400 for indicating an uplink PT-RS port according to some embodiments. For example, the apparatus 400 may be provided as a network device. Referring to FIG. 12, the apparatus 400 includes a processing component 422, which further includes one or more processors; and a memory resource represented by memory 432 for storing instructions executable by the processing component 422, such as application programs. The application program stored in memory 432 may include one or more modules each corresponding to a set of instructions. In addition, the processing component 422 is configured to execute instructions to perform any foregoing methods.

The apparatus 400 may also include a power component 426 configured to perform power management of the apparatus 400, a wired or wireless network interface 450 configured to connect the apparatus 400 to a network, and an input-output (I/O) interface 458. The apparatus 400 can operate based on an operating system stored in the memory 432, such as Windows Server^{™}, Mac OS X^{™}, Unix^{™}, Linux^{™}, FreeBSD^{™} or the like.

In some embodiments, there is also provided a non-transitory computer-readable storage medium including instructions, such as the memory 432 including instructions, executable by the processor 422 of the apparatus 400 to perform the method described above. For example, the non-transitory computer-readable storage medium may be ROM, RAM, CD-ROM, magnetic tape, floppy disk, optical data storage device, and the like.

It is further understood that in the present disclosure, "multiple/plurality" refers to two or more than two, and other quantifiers are similar thereto. "And/or" describes the association relationship of associated objects, indicating that three relationships may exist. For example, A and/or B may represent: A exists alone, both A and B exist, and B exists alone. The character "/" generally indicates that the associated objects before and after are in an "or" relationship. The singular forms "a", "the", and "said" are also intended to include plural forms, unless the context clearly indicates other meanings.

It is further understood that the terms "first", "second", and the like are used to describe various information, but such information should not be limited to these terms. These terms are only used to distinguish the same type of information from each other, and do not indicate a specific order or degree of importance. In fact, the expressions "first", "second", and the like can be used interchangeably. For example, without departing from the scope of the present disclosure, the first information can also be referred to as the second information, and similarly, the second information can also be referred to as the first information.

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Other embodiments of this disclosure will be readily apparent to those skilled in the art from consideration of the specification and practice of the invention disclosed herein. This application is intended to cover any modification, use or adaptation of this disclosure, and these modifications, uses or adaptations follow the general principles of this disclosure and include common knowledge or conventional technical means in the art, which are not disclosed here.

It should be understood that this disclosure is not limited to the precise constructions which have been described above and shown in the drawings, and various modifications and changes may be made without departing from the scope thereof. The scope of this disclosure is limited only by the scope of the appended claims.

## Claims

1. A method for indicating an uplink phase tracking reference signal (PT-RS) port, **characterized in** being applied to a network device and comprising:
configuring, in response to determining that a terminal performs simultaneous transmission via multi-panel (STxMP) of a physical uplink shared channel (PUSCH) based on a single downlink control information (S-DCI) scheduling mode, the terminal to send a PT-RS reference signal; and
sending indication information to the terminal, wherein the indication information is used to indicate an association relationship between a DMRS port and a PT-RS port when the terminal sends the PT-RS reference signal.

2. The method according to claim 1, wherein the indication information comprises a PT-RS-DMRS association relationship indication field, and different indication modes of the PT-RS-DMRS association relationship indication field are used to indicate different association relationships between the PT-RS port and the DMRS port.

3. The method according to claim 2, wherein an indication mode of the association relationship between the DMRS port and the PT-RS port is determined based on at least one of following information:
a maximum number of PT-RS ports;
a transmission mode adopted by the terminal for uplink transmission;
an actual transmission rank of the terminal.

4. The method according to claim 3, wherein, in response to the maximum number of PT-RS ports being 1, the indication mode of the association relationship between the DMRS port and the PT-RS port is determined based on the actual transmission rank.

5. The method according to claim 4, wherein, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

6. The method according to claim 2, wherein, in response to the maximum number of PT-RS ports being 2, the indication mode of the association relationship between the DMRS port and the PT-RS port is determined based on the transmission mode and the actual transmission rank.

7. The method according to claim 6, wherein, in response to the transmission mode being a space division multiplexing (SDM) transmission mode and the actual transmission rank being 2, the PT-RS-DMRS association relationship indication field is indicated by 0 bit.

8. The method according to claim 6, wherein, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/TCI/TO supported by the terminal.

9. The method according to claim 8, wherein, in response to the combination of transmission ranks corresponding to PUSCH transmission of different TRP/Panel/TCI/TO supported by the terminal comprising a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

10. The method according to claim 8, wherein, in response to the combination of transmission ranks corresponding to PUSCH transmission of different TRP/Panel/TCI/TO supported by the terminal comprising a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

11. The method according to claim 8, wherein, in response to the combination of transmission ranks corresponding to PUSCH transmission of different TRP/Panel/TCI/TO supported by the terminal comprising a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

12. The method according to claim 6, wherein, in response to the transmission mode being a frequency division multiplexing (FDM) transmission mode or a single frequency network (SFN) transmission mode, and the actual transmission rank being greater than 1, the PT-RS-DMRS association relationship indication field indicates, through different bits, different PT-RS ports of different panels.

13. The method according to claim 12, wherein the actual transmission rank is 2, and the PT-RS-DMRS association relationship indication field indicates the different PT-RS ports of different panels through 2 bits.

14. The method according to claim 12, wherein the actual transmission rank is greater than 2, and the PT-RS-DMRS association relationship indication field indicates the different PT-RS ports of different panels through 4 bits.

15. The method according to claim 9, 10, 12 or 13, wherein a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

16. The method according to claim 11, wherein the 2 bits are used to indicate association relationship between PT-RS ports, corresponding to a panel with the actual transmission rank being 3, and 3 corresponding DMRS ports on the panel; and
an indication bit number of a PT-RS port, corresponding to a panel with the actual transmission rank being 1, is 0.

17. The method according to claim 12, wherein a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

18. A method for indicating an uplink phase tracking reference signal (PT-RS) port, **characterized in** being applied to a terminal and comprising:
acquiring indication information sent by a network device, wherein the indication information is used to indicate an association relationship between a DMRS port and a PT-RS port when the terminal sends a PT-RS reference signal;
performing simultaneous transmission via multi-panel (STxMP) of a physical uplink shared channel (PUSCH) based on a single downlink control information (S-DCI) scheduling mode, and sending the PT-RS reference signal based on the association relationship between the DMRS port and the PT-RS port indicated by the indication information.

19. The method according to claim 18, wherein the indication information comprises a PT-RS-DMRS association relationship indication field, and different indication modes of the PT-RS-DMRS association relationship indication field are used to indicate different association relationships between the PT-RS port and the DMRS port.

20. The method according to claim 19, wherein an indication mode of the association relationship between the DMRS port and the PT-RS port is determined based on at least one of following information:
a maximum number of PT-RS ports;
a transmission mode adopted by the terminal for uplink transmission;
an actual transmission rank of the terminal.

21. The method according to claim 20, wherein, in response to the maximum number of PT-RS ports being 1, the indication mode of the association relationship between the DMRS port and the PT-RS port is determined based on the actual transmission rank.

22. The method according to claim 21, wherein, in response to the actual transmission rank being greater than 1, the PT-RS-DMRS association relationship indication field is indicated by 2 bits, and a number of DMRS ports is a total number of all DMRS ports indicated and allocated by the S-DCI for the terminal.

23. The method according to claim 19, wherein, in response to the maximum number of PT-RS ports being 2, the indication mode of the association relationship between the DMRS port and the PT-RS port is determined based on the transmission mode and the actual transmission rank.

24. The method according to claim 23, wherein, in response to the transmission mode being a space division multiplexing (SDM) transmission mode and the actual transmission rank being 2, the PT-RS-DMRS association relationship indication field is indicated by 0 bit.

25. The method according to claim 23, wherein, in response to the transmission mode being an SDM transmission mode and the actual transmission rank being greater than 2, the indication mode of the PT-RS-DMRS association relationship indication field is determined based on a combination of transmission ranks corresponding to PUSCH transmission of different TRP/Panel/TCFTO supported by the terminal.

26. The method according to claim 25, wherein, in response to the combination of transmission ranks corresponding to PUSCH transmission of different TRP/Panel/TCI/TO supported by the terminal comprising a combination of transmission rank 1 and transmission rank 1, a combination of transmission rank 1 and transmission rank 2, a combination of transmission rank 2 and transmission rank 1, and a combination of transmission rank 2 and transmission rank 2, without supporting a combination of transmission rank 1 and transmission rank 3 and a combination of transmission rank 3 and transmission rank 1, the PT-RS-DMRS association relationship indication field is indicated by 2 bits, and different bits are used to indicate different PT-RS ports of different panels.

27. The method according to claim 25, wherein, in response to the combination of transmission ranks corresponding to PUSCH transmission of different TRP/Panel/TCI/TO supported by the terminal comprising a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through different bits in 2 bits, different PT-RS ports in case of the combination of transmission rank 2 and transmission rank 2.

28. The method according to claim 25, wherein, in response to the combination of transmission ranks corresponding to PUSCH transmission of different TRP/Panel/TCI/TO supported by the terminal comprising a combination of transmission rank 1 and transmission rank 1, a combination of transmission rank 1 and transmission rank 2, a combination of transmission rank 2 and transmission rank 1, and a combination of transmission rank 2 and transmission rank 2, and supporting a combination of transmission rank 1 and transmission rank 3 and a combination of transmission rank 3 and transmission rank 1, the PT-RS-DMRS association relationship indication field indicates, through 2 bits, the association relationship between the DMRS port and the PT-RS port on a panel with a transmission rank greater than 1.

29. The method according to claim 23, wherein, in response to the transmission mode being a frequency division multiplexing (FDM) transmission mode or a single frequency network (SFN) transmission mode, and the actual transmission rank being greater than 1, the PT-RS-DMRS association relationship indication field indicates, through different bits, different PT-RS ports of different panels.

30. The method according to claim 29, wherein the actual transmission rank is 2, and the PT-RS-DMRS association relationship indication field indicates the different PT-RS ports of different panels through 2 bits.

31. The method according to claim 29, wherein the actual transmission rank is greater than 2, and the PT-RS-DMRS association relationship indication field indicates the different PT-RS ports of different panels through 4 bits.

32. The method according to claim 26, 27, 29 or 30, wherein a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

33. The method according to claim 28, wherein the 2 bits are used to indicate association relationship between PT-RS ports, corresponding to a panel with the actual transmission rank being 3, and 3 corresponding DMRS ports on the panel; and
an indication bit number of a PT-RS port, corresponding to a panel with the actual transmission rank being 1, is 0.

34. The method according to claim 29, wherein a high-order bit is used to indicate, in two front or rear DMRS antenna ports sharing a first PT-RS port, the first PT-RS port of a first panel; and a low-order bit is used to indicate, in two front or rear DMRS antenna ports sharing a second PT-RS port, the second PT-RS port of a second panel.

35. An apparatus for indicating an uplink phase tracking reference signal (PT-RS) port, **characterized in** comprising:
a processing module, configured to configure, in response to determining that a terminal performs simultaneous transmission via multi-panel (STxMP) of a physical uplink shared channel (PUSCH) based on a single downlink control information (S-DCI) scheduling mode, the terminal to send a PT-RS reference signal; and
a sending module, configured to send indication information to the terminal, wherein the indication information is used to indicate an association relationship between a DMRS port and a PT-RS port when the terminal sends the PT-RS reference signal.

36. An apparatus for indicating an uplink phase tracking reference signal (PT-RS) port, **characterized in** comprising:
an acquiring module, configured to acquire indication information sent by a network device, wherein the indication information is used to indicate an association relationship between a DMRS and port a PT-RS port when the terminal sends a PT-RS reference signal; and
a sending module, configured to perform simultaneous transmission via multi-panel (STxMP) of a physical uplink shared channel (PUSCH) based on a single downlink control information (S-DCI) scheduling mode, and send the PT-RS reference signal based on the association relationship between the DMRS port and the PT-RS port indicated by the indication information.

37. An apparatus for indicating an uplink phase tracking reference signal (PT-RS) port, **characterized in** comprising:
a processor; and
a memory configured to store executable instructions of the processor,
wherein the processor is configured to implement the method according to any one of claims 1 to 17.

38. An apparatus for indicating an uplink phase tracking reference signal (PT-RS) port, **characterized in** comprising:
a processor; and
a memory configured to store executable instructions of the processor,
wherein the processor is configured to implement the method according to any one of claims 18 to 34.

39. A storage medium storing instructions therein, wherein the instructions in the storage medium, upon being executed by a processor of a network device, cause the network device to implement the method according to any one of claims 1 to 17.

40. A storage medium storing instructions therein, wherein the instructions in the storage medium, upon being executed by a processor of a terminal, cause the terminal to implement the method according to any one of claims 18 to 34.
